(19) Europäisches Patentamt
European Patent Office
Office européen des brevets

(11) **EP 1 825 603 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **05821659.9**

(22) Anmeldetag: **12.12.2005**

(51) Int Cl.:
*H04B 1/707* (2006.01)  *H04L 27/26* (2006.01)

(86) Internationale Anmeldenummer:
**PCT/EP2005/013299**

(87) Internationale Veröffentlichungsnummer:
**WO 2006/063765 (22.06.2006 Gazette 2006/25)**

(54) **Vorrichtung und Verfahren zum Bestimmen eines Korrelationswertes**

Apparatus and method for determining a correlation value

Système et procédé pour déterminer une valeur de corrélation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059958**

(43) Veröffentlichungstag der Anmeldung:
**29.08.2007 Patentblatt 2007/35**

(73) Patentinhaber: **Fraunhofer-Gesellschaft zur Förderung der angewandten Forschung e.V. 80686 München (DE)**

(72) Erfinder:
• **WAGNER, Carmen 91094 Langensendelbach (DE)**
• **STADALI, Holger 91058 Erlangen (DE)**
• **HOFMANN, Günter 96123 Litzendorf (DE)**
• **BREILING, Marco 91052 Erlangen (DE)**

(74) Vertreter: **Pfenning, Meinig & Partner GbR Patent- und Rechtsanwälte Joachimstaler Strasse 12 10719 Berlin (DE)**

(56) Entgegenhaltungen:
DE-A1- 10 249 413  US-A- 5 579 338
US-A1- 2004 131 031

**Beschreibung**

Die vorliegende Erfindung bezieht sich auf Vorrichtungen und Verfahren zum Bestimmen eines Korrelationswertes, die insbesondere für digitale Übertragungssysteme einsetzbar sind.

Damit sich ein Empfänger in einem digitalen Übertragungssystem auf ein von einem Sender ausgesendetes digitales Signal aufsynchronisieren kann, strahlt der Sender ein digitales Signal aus, das dem Empfänger bekannt ist. Die Aufgabe des Empfängers liegt darin, den genauen Eintreffzeitpunkt des gesendeten Signals zu bestimmen. Um den Eintreffzeitpunkt zu bestimmen, wird die Kreuzkorrelierte zwischen dem digitalen Empfangssignal und dem bekannten digitalen Sendesignal berechnet. Anschließend wird das Betragsmaximum der Kreuzkorrelierten detektiert und der Eintreffzeitpunkt des Sendesignals aus der Position des Korrelationsbetragsmaximums bestimmt.

Bei einem Vorhandensein von Trägerfrequenzversatz zwischen Sender und Empfänger kann es zu einer "Selbstauslöschung" der Kreuzkorrelation ab einer gewissen Länge des Sendesignals kommen, d. h. die einzelnen Summanden in der Kreuzkorrelation addieren sich wegen eines durch den Trägerfrequenzversatz hervorgerufenen komplexen Drehterms zu Null.

Im folgenden Beispiel wird eine perfekte Übertragung mit Ausnahme eines Trägerfrequenzversatzes zwischen Sender und Empfänger sowie einem konstanten Kanalkoeffizienten a und einer Verzögerung L angenommen. Wenn im Sender ein zu sendender T-Burst x[k] der Länge t_burstlen, im Folgenden mit der Variablen K abgekürzt, abgespeichert ist, dann empfängt der Empfänger das komplexe Basisbandsignal

$$y[k + L] = \alpha \cdot x[k] \cdot e^{j(2\pi\Delta Fk + \phi_0)},$$

wobei $\Delta F$ = maxfreqoffsppm $\cdot$ $10^{-6}$ $\cdot$ carfreq/B_clock der Frequenzversatz normiert auf einen B_sample-Takt ist. Das heißt, pro B_sample vergrößert sich der Phasenunterschied zwischen x[k] und y[k] um 2 $\pi\Delta F$ Radiant. Dieses Empfangssignal y[k] soll nun mit dem im Sender und Empfänger gespeicherten Originalsignal x[k] korreliert werden.

Mit maxfreqoffsppm = 30, carfreq = 2,445 GHz und B_clock = 101,875 MHz ändert sich beispielsweise die Phase pro B_sample um 0,0045 Radiant bzw. 0,00072 vom Vollkreis. Somit durchläuft diese Phasendifferenz zwischen x[k] und y[k] innerhalb von 1.389 Samples einmal den Vollkreis.

Die Kreuzkorrelation zwischen Empfangssignal y[k] und Korrelationssequenz x[k] ist jetzt definiert als

$$r_{yx}[l] = \sum_{k=0}^{K-1} y[k + l] \cdot x^*[k].$$

Der Index 1 bezeichnet dabei, um wie viel y[k] in der Korrelationsberechnung verschoben werden soll. Im Empfänger interessieren uns die t_nocorrvals-Korrelationswerte für Indizes 1 = 0, ..., t_nocorrvals - 1.

Wenn y[k] so verschoben um L B_samples verschoben wird, so dass sich y[k+L] und x[k] optimal decken, so erhalten wir als Korrelationswert

$$r_{yx}[L] = \sum_{k=0}^{K-1} \alpha \cdot |x[k]|^2 e^{j(2\pi\Delta Fk + \phi_0)}.$$

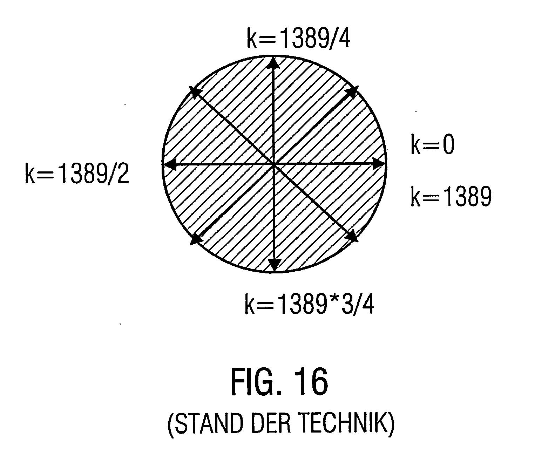

Nehmen wir an, dass $|x[k]|^2$ stets konstant = C ist und dass der gesamte T-Burst genau K = 1.389 B_samples lang ist, dann entspricht obige Korrelationsberechnung einer Summation über einen komplexwertigen Zeiger konstanter Länge, der sich im Laufe der 1.389 B_samples genau einmal im Kreis dreht. Die Drehung des Zeigers ist in Fig. 16 gezeigt, wobei die Figur die komplexe Zahlenebene darstellt.

Es ist ersichtlich, dass die Summation für den Korrelationswert in diesem Beispiel $r_{yx}[L]$ = 0 ergibt, obwohl sich x[k] und y[k+L] optimal decken. Bei diesem Trägerfrequenzversatz und dieser T-Burst-Länge schlägt also die Bestimmung der Länge des T-Bursts x[k] innerhalb des Empfangssignals y[k] mit Hilfe der Korrelationssequenz x[k] fehl. Als Folge einer Auslöschung des Korrelationswertes aufgrund eines Trägerfrequenzversatzes ist beispielsweise eine Bestimmung des Korrelationsbetragsmaximums nicht möglich. Als Folge davon ist eine Aufsynchronisation zwischen Sender und Empfänger eines Übertragungssystems erschwert oder es kann zu einer fehlerhaften Datenübertragung kommen.

Es ist die Aufgabe der vorliegenden Erfindung, eine Vorrichtung und ein Verfahren zu schaffen, die eine sichere Bestimmung eines Korrelationswertes ermöglichen.

Diese Aufgabe wird durch eine Vorrichtung zum Bestimmen eines Korrelationswertes gemäß Anspruch 1 oder 9, ein Verfahren zum Bestimmen eines Korrelationswertes gemäß Anspruch 8 oder 10 und ein Computerprogramm zum Bestimmen eines Korrelationswertes gemäß Anspruch 11 gelöst.

Die vorliegende Erfindung schafft eine Vorrichtung zum Bestimmen eines Korrelationswerts aus einer Korrelation zwischen einer ersten Wertefolge mit komplexen Werten und einer zweiten Wertefolge mit komplexen Werten, mit folgenden Merkmalen:

einer Korrelationseinrichtung, die ausgebildet ist, um einen ersten Teilkorrelationswert aus einer Korrelation zwischen einer ersten Teilmenge der ersten Wertefolge und einer ersten Teilmenge der zweiten Wertefolge, und einen zweiten Teilkorrelationswert aus einer Korrelation zwischen einer zweiten Teilmenge der ersten Wertefolge und einer zweiten Teilmenge der zweiten Wertefolge zu ermitteln;

einer Verarbeitungseinrichtung, die ausgebildet ist, um aus dem ersten Teilkorrelationswert oder dem zweiten Teilkorrelationswert einen verarbeiteten Teilkorrelationswert mit einem angepassten Phasenterm zu ermitteln; und

einer Berechnungseinrichtung, die ausgebildet ist, um unter Verwendung des verarbeiteten Teilkorrelationswerts den Korrelationswert zu bestimmen.

Das Dokument US 5 579 338 offenbart die Bestimmung des Korrelationswertes zweier komplexwertiger Folgen mit Hilfe von Teilkorrelationswerten, die aus Teilfolgen gebildet werden. Das Betragsmaximum des Korrelationswertes wird ermittelt, um den Eintreffzeitpunkt eines Signals zu bestimmen.

Der vorliegenden Erfindung liegt die Erkenntnis zugrunde, dass es vorteilhaft ist, die Berechnung einer Kreuzkorrelation mittels Teilkorrelationen durchzuführen. Die Kreuzkorrelation wird dabei in Stücke zerhackt, die den Teilkorrelationen entsprechen. Durch eine Verknüpfung der Teilkorrelationswerte wird der Korrelationswert ermittelt. Die Korrelationsfolgen können komplexe Werte aufweisen, so dass die Teilkorrelationswerte ebenfalls komplexwertig sein können und somit in der komplexen Zahlenebene einen Phasenterm aufweisen. Beispielsweise aufgrund eines Frequenzversatzes der Wertefolgen können die Phasenterme unterschiedlich sein. Um die einzelnen Teilkorrelationswerte zu verknüpfen weisen die verarbeiteten Teilkorrelationswerte einen angepassten Phasenterm auf, das heißt, der Phasenterm der Teilkorrelationswerte wurde so verändert, dass die verarbeiteten Teilkorrelationswerte in der komplexen Zahlenebene überlagert sind.

Wird die erfindungsgemäße Vorrichtung in einem Übertragungssystem eingesetzt und es handelt sich bei den Wertefolgen um ein Empfangssignal und ein im Empfänger vorliegendes Sendesignal, so findet die Berechnung des Korrelationswertes jeweils für jede Verschiebung zwischen Empfangssignal und dem im Empfänger vorliegendem Sendesignal statt.

Der erfindungsgemäße Ansatz ist vorteilhaft, da innerhalb der kurzen Teilkorrelationen der destruktive Effekt einer Selbstauslöschung der Kreuzkorrelation nicht auftritt. Somit ermöglicht der erfindungsgemäße Ansatz eine zuverlässige Bestimmung eines Korrelationswertes, auch wenn zwischen den Korrelationsfolgen ein Frequenzversatz vorliegt. Ein weiterer Vorteil besteht darin, dass die Berechnung der Teilkorrelationswerte parallel durchgeführt werden kann.

Gemäß einem Ausführungsbeispiel werden die Phasenterme der einzelnen Teilkorrelationswerte eliminiert und die daraus resultierenden verarbeiteten Teilkorrelationswerte aufsummiert. Die Eliminierung der Phasenterme kann über eine Betragsbildung erfolgen.

Die Eliminierung der Phasenterme ist vorteilhaft, da eine entsprechende Implementierung aufgrund des geringen Rechenaufwandes einfach zu realisieren ist. Dadurch kann der Korrelationswert schnell ermittelt werden.

Gemäß einem weiteren Ausführungsbeispiel wird aus jeweils benachbarten Teilkorrelationswerten ein verarbeiteter Teilkorrelationswert gebildet, wobei die verarbeiteten Teilkorrelationswerte einen angepassten Phasenterm aufweisen, der der Phasendifferenz benachbarter Teilkorrelationswerte entspricht. Die verarbeiteten Teilkorrelationswerte werden aufsummiert, um den Korrelationswert zu ermitteln. Die Ermittlung der Phasendifferenz kann über eine konjungiert komplexe Multiplikation benachbarter Teilkorrelationswerte erfolgen.

Eine Berücksichtigung der Phasenlage der Teilkorrelationswerte ist vorteilhaft, da die Ermittlung des Korrelationswertes auch bei starkem Frequenzversatz zwischen den Wertefolgen noch sicher durchführbar ist.

Gemäß einem weiteren Ausführungsbeispiel wird die Phasendifferenz zwischen benachbarten Teilkorrelationswerten ermittelt und der Phasenterm der einzelnen Teilkorrelationswerte jeweils so weit reduziert bzw. erhöht, so dass die Phasenterme der verarbeiteten Teilkorrelationswerte an einen ausgewählten Teilkorrelationswert, beispielsweise dem ersten Teilkorrelationswert, angepasst sind. Es werden also alle Teilkorrelationswerte in der komplexen Zahlenebene so weit vorgedreht bzw. zurückgedreht, bis sie mit dem ersten Teilkorrelationswert überlagert sind. Der Korrelationswert wird durch eine Verknüpfung der überlagerten verarbeiteten Teilkorrelationswerte mit dem ersten Teilkorrelationswert bestimmt.

Dem Ausführungsbeispiel liegt die Erkenntnis zugrunde, dass die Phasenänderung zwischen zwei aufeinander folgenden Teilkorrelationswerten annäherungsweise konstant ist. Nach einer Ermittlung des Rotationsterms, der der Phasenänderung entspricht, können die komplexen Teilkorrelationswerte kohärent aufaddiert werden. Da der Betrag der Rotationsterme der Größe und damit der Zuverlässigkeit der Teilkorrelationswerte Rechnung trägt, können die beteiligten Rotationsterme mit ihrer Zuverlässigkeit gewichtet werden.

Die kohärente Addition der Teilkorrelationswerte kann mittels zweier getrennter Additionen erfolgen, bei denen jeweils die Hälfte der Teilkorrelationswerte aufaddiert wird. Ein Vorteil einer solchen Implementierung liegt darin, dass eine Kaskadierung nach dem Horner-Schema verwendet werden kann, wodurch die Verzögerungszeit bei der Addition verringert wird. Ein weiterer Vorteil liegt darin, dass ein möglicher Phasenfehler bei der Berechnung des Korrelationswertes gering gehalten werden kann. Dies ist wichtig, da in der Regel die Phase im Rotationsterm nicht fehlerfrei geschätzt werden kann. Entsprechend zu der Phase kann ein Fehler bei der Normierung des Rotationsterms bei der Berechnung der Kreuzkorrelationsfolge verringert werden, indem die Addition mittels zweier getrennter Aufsummierungen erfolgt.

Die erfindungsgemäße Kombination von Teilkorrelationen zur Berechnung des Korrelationswertes ist robust gegen Frequenzversatz, wobei der Frequenzversatz weder explizit noch implizit geschätzt werden muss.

Bevorzugte Ausführungsbeispiele der vorliegenden Erfindung werden nachfolgend Bezug nehmend auf die beiliegenden Zeichnungen näher erläutert. Es zeigen:

Fig. 1              ein Blockschaltbild einer Vorrichtung zum Bestimmen eines Korrelationswertes gemäß einem Ausführungsbeispiel der vorliegenden Erfindung;

Fig. 2              eine graphische Darstellung von Teilkorrelationswerten gemäß der vorliegenden Erfindung;

Fig. 3              ein Scatter-Diagramm von Teilkorrelationssamples gemäß einem Ausführungsbeispiel der vorliegenden Erfindung;

Fig. 4              eine graphische Darstellung einer Korrelationskurve gemäß einem Ausführungsbeispiel der vorliegenden Erfindung;

Fig. 5              eine graphische Darstellung des Verhältnisses zwischen Korrelation und Korrelationsfloor der in Fig. 4 gezeigten Korrelationskurve;

Fig. 6              ein Scatter-Diagramm der Teilkorrelationssamples gemäß einem weiteren Ausführungsbeispiel der vorliegenden Erfindung;

Fig. 7              eine graphische Darstellung einer Korrelationskurve gemäß einem weiteren Ausführungsbeispiel der vorliegenden Erfindung;

Fig. 8              eine graphische Darstellung des Verhältnisses zwischen Korrelation und Korrelationsfloor gemäß der in Fig. 7 gezeigten Korrelationskurve;

Fig. 9              eine Tabelle mit Werten für eine Betragsschätzung gemäß einem Ausführungsbeispiel der vorliegenden Erfindung;

Fig. 10             eine graphische Darstellung von Teilkorrelationswerten gemäß einem weiteren Ausführungsbeispiel der vorliegenden Erfindung;

Fig. 11             ein Blockschaltbild eines Empfängers mit einer Vorrichtung zum Bestimmen eines Korrelationswertes gemäß einem Ausführungsbeispiel der vorliegenden Erfindung;

Fig. 12             ein Blockschaltbild eines weiteren Ausführungsbeispiels der vorliegenden Erfindung;

Fig. 13             ein Blockschaltbild einer Korrelationseinrichtung gemäß einem Ausführungsbeispiel der vorliegenden Erfindung;

Fig. 14             ein Blockschaltbild einer Einrichtung zum Bestimmen eines Teilkorrelationswertes gemäß einem Ausführungsbeispiel der vorliegenden Erfindung;

Fig. 15a bis 15p    Übersicht über die verwendeten Parameter; und

Fig. 16             eine graphische Darstellung einer Korrelationswertberechnung gemäß dem Stand der Technik.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

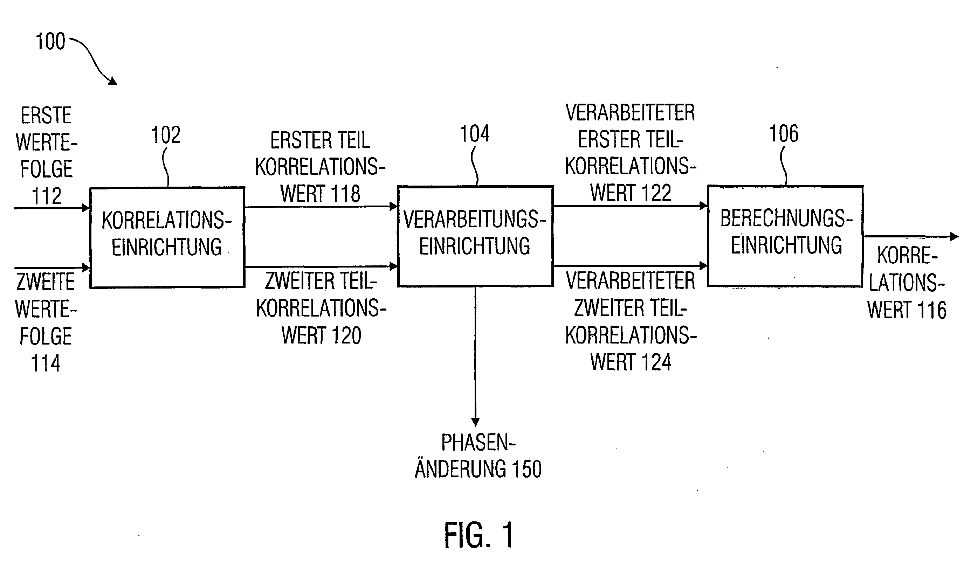

Fig. 1 zeigt eine schematische Darstellung einer Vorrichtung zum Bestimmen eines Korrelationswertes aus einer Korrelation zwischen einer ersten Wertefolge und einer zweiten Wertefolge gemäß einem Ausführungsbeispiel der vorliegenden Erfindung. Die Vorrichtung 100 zum Bestimmen eines Korrelationswertes weist eine Korrelationseinrichtung 102, eine Verarbeitungseinrichtung 104 und eine Berechnungseinrichtung 106 auf. Die Vorrichtung 100 ist ausgebildet, um aus einer ersten Wertefolge 112 und einer zweiten Wertefolge 114 einen Korrelationswert 116 zu bestimmen.

Die Korrelationseinrichtung 102 ist ausgebildet, um die erste Wertefolge 112 und die zweite Wertefolge 114 zu empfangen. Alternativ kann die zweite Wertefolge 114 in der Korrelationseinrichtung gespeichert sein. Die erste Wertefolge 112 und die zweite Wertefolge 114 können komplexe Werte aufweisen. Die Korrelationseinrichtung 102 ist ausgebildet, um aus einer Korrelation zwischen einer ersten Teilmenge der ersten Wertefolge und einer ersten Teilmenge der zweiten Wertefolge einen ersten Teilkorrelationswert 118 zu ermitteln. Ferner ist die Korrelationseinrichtung 102 ausgebildet, um aus einer zweiten Teilmenge der ersten Wertefolge 112 und einer zweiten Teilmenge der zweiten Wertefolge 114 einen zweiten Teilkorrelationswert 120 zu ermitteln. Die Teilmengen der ersten Wertefolge 112 und der zweiten Wertefolge 114 entsprechen sich. Das heißt, dass die Teilmengen gemäß einer gemeinsamen Unterteilungsvorschrift aus den Wertefolgen 112, 114 ermittelt werden. Gemäß diesem Ausführungsbeispiel überschneiden sich die Teilmengen nicht und decken die gesamten Wertebereiche der Wertefolgen 112, 114 ab. Bestehen die Wertefolgen 112, 114 beispielsweise jeweils aus 100 Werten, so kann die erste Teilmenge beispielsweise aus den jeweils ersten 50 Werten der ersten Wertefolge 112 und der zweiten Wertefolge 114 bestehen und die zweite Teilmenge aus den jeweils zweiten 50 Werten der Wertefolgen 112, 114. Sind die Wertefolgen 112, 114 in weitere Teilfolgen unterteilt, so ist die Korrelationseinrichtung 102 ausgebildet, um aus den jeweils weiteren Teilmengen der Wertefolgen 112, 114 weitere Teilkorrelationswerte zu ermitteln.

Die Teilkorrelationswerte 118, 120 werden in der Korrelationseinrichtung 102 ermittelt, indem die entsprechenden Teilmengen der Wertefolgen 112, 114 miteinander korreliert werden. Bei der Korrelation kann es sich um eine Kreuzkorrelation oder um eine Autokorrelation handeln. Da die Wertefolgen 112, 114 komplexe Werte aufweisen, können die Teilkorrelationswerte 118, 120 ebenfalls komplexwertig sein, d. h. sie weisen einen Phasenterm auf. Die Korrelationseinrichtung 102 stellt die Teilkorrelationswerte 118, 120 an die Verarbeitungseinrichtung 104 bereit.

Die Verarbeitungseinrichtung 104 ist ausgebildet, um den ersten Teilkorrelationswert 118 und den zweiten Teilkorrelationswert 120 zu empfangen. Stellt die Korrelationseinrichtung 102 weitere Teilkorrelationswerte bereit, so ist die Verarbeitungseinrichtung 104 ausgebildet, um die weiteren Teilkorrelationswerte ebenfalls zu empfangen. Die Verarbeitungseinrichtung 104 ist ausgebildet, um aus dem ersten Teilkorrelationswert 118 und dem zweiten Teilkorrelationswert 120 einen verarbeiteten Teilkorrelationswert 122 mit einem angepassten Phasenterm zu ermitteln. Alternativ kann die Verarbeitungseinrichtung 104 ausgebildet sein, um aus dem ersten Teilkorrelationswert 118 und dem zweiten Teilkorrelationswert 120 den verarbeiteten ersten Teilkorrelationswert 122 und einen verarbeiteten zweiten Teilkorrelationswert 124 zu ermitteln. Die verarbeiteten Teilkorrelationswerte 122, 124 haben einen angepassten Phasenterm. Ist eine Anpassung des Phasenterms eines Teilkorrelationswertes 118, 120 nicht erforderlich, so kann der Phasenterm der verarbeiteten Teilkorrelationswerte 122, 124 dem entsprechenden Phasenterm der Teilkorrelationswerte 118, 120 entsprechen. Die Verarbeitungseinrichtung 104 ist ausgebildet, um den verarbeiteten ersten Teilkorrelationswert 122 und den verarbeiteten zweiten Teilkorrelationswert 124 bereitzustellen.

Die Berechnungseinrichtung 106 ist ausgebildet, um den verarbeiteten ersten Teilkorrelationswert 122 und den verarbeiteten zweiten Teilkorrelationswert 124 zu empfangen. Stellt die Verarbeitungseinrichtung 104 weitere verarbeitete Teilkorrelationswerte bereit, so ist die Berechnungseinrichtung 106 ausgebildet, um diese weiteren verarbeiteten Teilkorrelationswerte ebenfalls zu empfangen. Die Berechnungseinrichtung 106 ist ausgebildet, um aus den verarbeiteten Teilkorrelationswerten 122, 124 den Korrelationswert 116 bereitzustellen. Wird lediglich ein verarbeiteter Teilkorrelationswert 122 an die Berechnungseinrichtung 106 bereitgestellt, so ist die Berechnungseinrichtung 106 ausgebildet, um den Korrelationswert 116 aus dem einen verarbeiteten Teilkorrelationswert 122 zu bestimmen. Werden eine Mehrzahl von verarbeiteten Teilkorrelationswerten 122, 124 an die Berechnungseinrichtung 106 bereitgestellt, so ist die Berechnungseinrichtung 106 ausgebildet, um die verarbeiteten Teilkorrelationswerte 122, 124 miteinander zu verknüpfen und das Verknüpfungsergebnis als Korrelationswert 116 bereitzustellen.

Gemäß diesem Ausführungsbeispiel ist die Vorrichtung 100 Teil eines Empfängers (nicht gezeigt in Fig. 1) eines digitalen Übertragungssystems. Die erste Wertefolge 112 ist ein Ausschnitt einer von dem Empfänger empfangenen Empfangsfolge. Beispielsweise kann es sich bei der ersten Wertefolge 112 um einen digitalen Burst handeln, der zur Aufsynchronisierung des Empfängers auf einen Sender (nicht gezeigt in Fig. 1) verwendet wird. Die zweite Wertefolge 114 entspricht der ursprünglichen ersten Wertefolge 112, wie sie von dem Sender ursprünglich ausgesendet wurde. Um den Eintreffzeitpunkt der ersten Wertefolge 112 zu ermitteln, ist die zweite Wertefolge 114, die der ersten Wertefolge 112 entspricht, in dem Empfänger bekannt. Beispiels-weise kann die zweite Wertefolge 114 in dem Empfänger bzw. der Vorrichtung 100 gespeichert sein oder alternativ von dieser empfangen werden. Alternativ kann die erste Wertefolge 112 Teil einer fortlaufende Wertefolge sein. In diesem Fall kann die erste Wertefolge 112 in der Vorrichtung 100 fortlaufend in Teilmengen unterteilt werden, die den Teilmengen der zweiten Wertefolge 114 entsprechen.

Gemäß einem weiteren Ausführungsbeispiel ist die Vorrichtung 100 ausgebildet, um einen Frequenzversatz zwischen der ersten Wertefolge 112 und der zweiten Wertefolge 114 zu bestimmen und als Phasenänderung 150 bereitzustellen. Die Phasenänderung 150 kann in der Verarbeitungseinrichtung 104 aus einem Vergleich oder einer Verknüpfung der Teilkorrelationswerte 118, 120 bestimmt werden.

Die Korrelationseinrichtung 102 kann eine einzelne oder eine Mehrzahl von Korrelationseinrichtungen aufweisen. Weist die Korrelationseinrichtung 102 lediglich eine einzelne Korrelationseinrichtung auf, so werden die Teilmengen der Wertefolgen 112, 114 in der Korrelationseinrichtung 102 nacheinander berechnet. Weist die Korrelationseinrichtung 102 eine Mehrzahl von Teilkorrelationseinrichtungen auf, so kann die Ermittlung der Teilkorrelationswerte 118, 120 parallel erfolgen. Die Verknüpfung der verarbeiteten Teilkorrelationswerte 122, 124 in der Berechnungseinrichtung 106 kann durch Addition oder Überlagerung der verarbeiteten Teilkorrelationswerte 122, 124 erfolgen.

Gemäß einem Ausführungsbeispiel der vorliegenden Erfindung wird in der Vorrichtung 100 eine Summation abschnittsweise für eine Anzahl t_nopartcorrs, im Folgenden mit der Variable N abgekürzt, Teilkorrelationssequenzen der Länge t_partcorrseqlen, im Folgenden durch die Variable M bezeichnet, durchgeführt. Die Teilkorrelationssequenzen entsprechen Teilmengen der Wertefolgen 112, 114. Wird die Burstlänge, d. h. die Länge der zweiten Wertefolge 114, mit K bezeichnet, so gilt für die Berechnung des Korrelationwertes 116

$$r_{yx,n}[l] = \sum_{k=n \cdot M}^{(n+1) \cdot M - 1} y[k + l] \cdot x^*[k]$$

für n = 0 ... N-1, wobei N*M ≥ K sein muss. x[k] entspricht der zweiten Wertefolge 114 und y[k+L] der ersten Wertefolge 112. Eine Verlängerung von x[k] von der ursprünglichen Länge K auf N*M erfolgt durch Auffüllen mit Nullen an einem oder beiden Enden, dem sogenannten Zero-Padding. Die Gesamtlänge N*M der zero-padded Korrelationssequenz x[k] wird mit t_paddcorrseqlen bezeichnet, wobei t_paddcorrseqlen > K ist.

In diesem Ausführungsbeispiel stehen zwei T-Bursts als Wertefolgen bereit. Beim Zero-Padden des T-Bursts X, wobei X den Wert 0 oder 1 aufweist, der Länge tX_burstlen zur Korrelationssequenz der Länge t_paddcorrseqlen werden

```
tX_frontpaddlength =
ceil((t_paddcorrseqlen - tX_burstlen)/2)
```

Nullen vor den Beginn des T-Bursts aufgefüllt, und der Rest, also

```
floor((t_paddcorrseqlen - tX_burstlen)/2)
```

Nullen werden an seinem Ende aufgefüllt.

Da letztendlich t_nocorrvals Korrelationswerte für eine Korrelationssequenzlänge t_paddcorrseqlen benötigt werden, wird insgesamt ein Empfangssignalfenster der Länge t_paddcorrseqlen + t_nocorrvals - 1 B_samples betrachtet. Die in dem Empfangssignalfenster liegenden Werte entsprechen der ersten Wertefolge 112.

Dem Empfänger liegt die zero-padded Korrelationssequenz für den T-Burst X bereits in Form von t_nopartcorrs komplexwertigen Teilkorrelationssequenzen tX_partcorrseqs für X = 0 oder 1, jeweils der Länge t_parcorrseqlen vor, die unmittelbar in obiger Summation verwendet werden können.

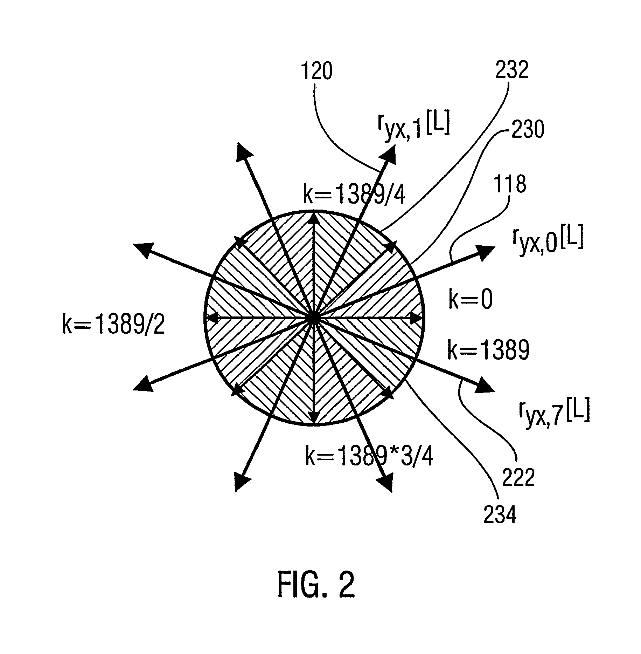

Fig. 2 ist eine graphische Darstellung der komplexen Zahlenebene zur Veranschaulichung des Prinzips der Teilkorrelationen. In dem folgenden Ausführungsbeispiel ist N = 8 und M = 174. Daraus folgt, dass N*M = 1.392 > K = 1.389, d. h. es müssen drei Nullen aufgefüllt werden. Die dünnen kurzen Pfeile in Fig. 2 repräsentieren die sich mit dem Index k weiter drehende Phasendifferenz zwischen x[k] und y[k+L]. An den Schraffuren ist erkennbar, über welche Indizes die acht Teilkorrelationen berechnet werden. Die dicken langen Pfeile repräsentieren die Ergebnisse der Teilkorrelationen. Zur Veranschaulichung sind einige derartige Segmente sowie die acht Ergebnisse der Teilkorrelationen mit Bezugszeichen gekennzeichnet. Der erste Teilkorrelationswert $r_{yx,0}[L]$ ist durch das Bezugszeichen 118 und der zweite Teilkorrelationswert $r_{yx,1}[L]$ ist mit dem Bezugszeichen 120 gekennzeichnet. Ein weiterer Teilkorrelationswert, in diesem Fall der achte Teilkorrelationswert $r_{yx,7}[L]$ ist durch das Bezugszeichen 222 gekennzeichnet. Der erste Teilkorrelationswert 118 ist ein Ergebnis einer Korrelation über eine erste Teilmenge 230 . Der zweite Teilkorrelationswert 120 ist über eine nachfolgende Teilmenge 232 ermittelt. Der achte Teilkorrelationswert 222 ist durch Korrelation über eine weitere Teilmenge 234, in diesem Fall der achten Teilmenge der Wertefolge berechnet.

Aus Fig. 2 ist ersichtlich, dass die Teilkorrelationen $r_{yx,n}[L]$ nicht verschwinden, während die gesamte Korrelation $r_{yx}[L]$, d. h . die Korrelation über die gesamte Wertefolge von k = 0 bis k = 1.389 Null ist. In jeder der Teilkorrelationen $r_{yx,n}[L]$ ist eine Verfälschung aufgrund der sich weiter drehenden Phasendifferenz zwischen den Wertefolgen x[k] und y[k+L] gering, weil sich die Phasendifferenz nur um pi/4 ändert. Dabei wird das in der Beschreibungseinleitung beschriebene Beispiel zugrundegelegt.

Aus Fig. 2 ist ferner ersichtlich, dass insgesamt acht komplexe Teilkorrelationswerte $r_{yx,n}[L]$ berechnet werden, die nun noch zu einem einzigen Korrelationswert verknüpft werden müssen. Die Verknüpfung der Teilkorrelationswerte kann auf unterschiedliche Arten erfolgen.

Gemäß einem Ausführungsbeispiel weist die Korrelationseinrichtung 16 Teilkorrelatoren auf, deren Samples parallel in die Verarbeitungseinrichtung eingelesen werden. Die komplexen Eingänge der Verarbeitungseinrichtung werden im Folgenden mit Input1, Input2, ..., Input16 bezeichnet und der reelle Ausgang für den Korrelationswert mit Output. Aus den komplexen Samples der 16 Teilkorrelationen wird das reelle Korrelationssignal bzw. der reelle Korrelationswert berechnet, für den nachfolgend ein Maximum bestimmt werden kann.

Gemäß diesem Ausführungsbeispiel besteht die Erzeugung des reellen Korrelationssignals darin, dass die Absolutwerte aller 16 Teilkorrelationssamples gebildet und aufsummiert werden. Das heißt, der Korrelationswert Output ist

$$\text{Output =}$$
$$\text{abs(Input1) + abs(Input2) + ... + abs(Input16).}$$

Ein Vorteil der Summation der Absolutwerte liegt in der einfachen Implementierung, da nur ein geringer Rechenaufwand zur Bildung der Absolutwerte erforderlich ist. Jedoch muss bei einem auftretendem Frequenz-Offset eine Entscheidungsschwelle, ob ein Maximum vorliegt, sehr klein gewählt werden, wenn die Bursts auch in einem solchen Falle detektiert werden sollen. Dies resultiert aus der Tatsache, dass die relative Phasenlage der zu addierenden Samples untereinander nicht berücksichtigt wird, was zu einer Verringerung des Korrelationsgewinns führt.

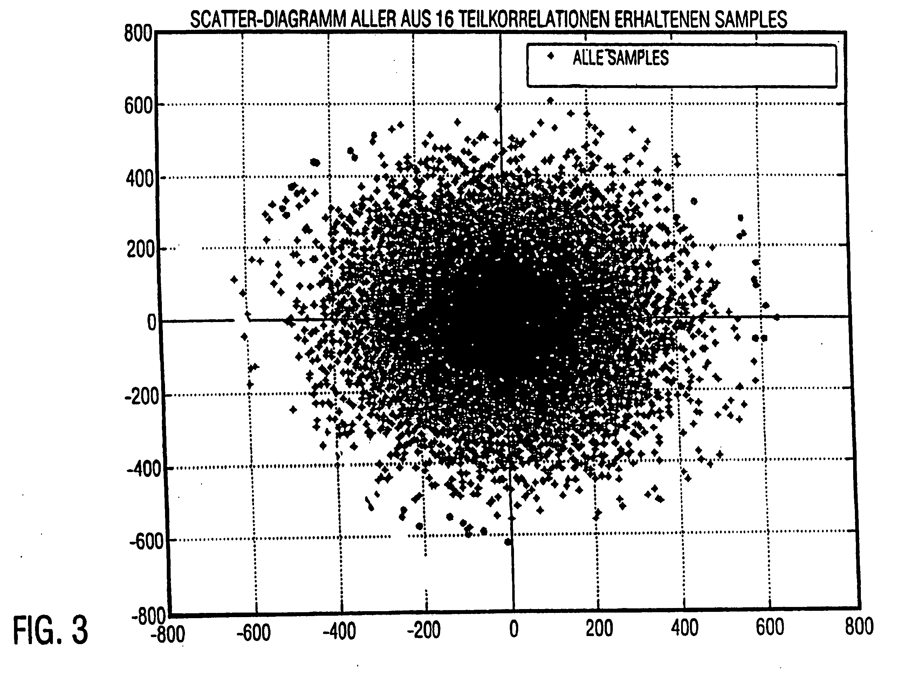

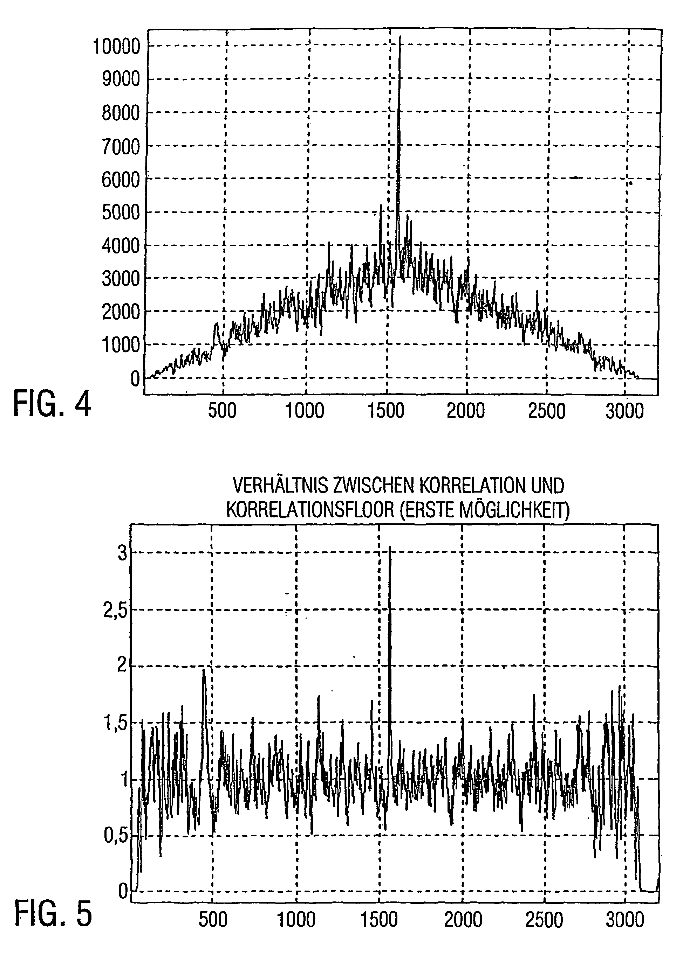

Als Beispiel dazu ist in Fig. 3 ein Scatter-Diagramm abgebildet, dessen Samples bei einem relativen Frequenzversatz von 30 ppm und ohne Rauschen aus den 16 Teilkorrelationen erhalten worden ist. Es existieren Punkte, die in Fig. 4 nach der Absolutwertbildung und Summation aller 16 Teilkorrelationsergebnisse den Peak im Korrelationssignal ergeben.

Fig. 4 zeigt eine graphische Darstellung einer Korrelationskurve, wobei die Teilkorrelationswerte durch Summation der Absolutwerte der Teilkorrelationen zusammengefügt wurden. Die Korrelationskurve stellt eine Korrelation der ersten Wertefolge mit der zweiten Wertefolge dar. Die in der Vorrichtung zum Bestimmen eines Korrelationswertes ermittelten Korrelationswerte sind in Fig. 4 aufgetragen. Die vertikale Achse stellt den Betrag der einzelnen Korrelationswerte dar. Aus Fig. 4 ist ersichtlich, dass in etwa in der Mitte des Korrelationssignals ein Peak vorhanden ist, der einem Korrelationsbetragsmaximum entspricht.

Fig. 5 ist eine graphische Darstellung des Verhältnisses zwischen Korrelation und Korrelationsfloor des in Fig. 4 gezeigten Korrelationssignals. Aus dem Verhältnis zwischen Korrelation und Korrelationsfloor wird deutlich, dass der in Fig. 4 gezeigte Peak selbst im rauschfreien Fall nur um das Dreifache aus dem Floor herausschaut.

Gemäß einem weiteren Ausführungsbeispiel einer Vorrichtung zum Bestimmen eines Korrelationswertes werden wegen des auftretenden Frequenzversatzes zwischen der ersten Wertefolge und der zweiten Wertefolge die relativen Phasenlagen der, in diesem Ausführungsbeispiel 16 Teilkorrelationssamples untereinander in die Berechnung des Korrelationssignals einbezogen. Die Einbeziehung der Phasenlage zwischen den einzelnen Teilkorrelationswerten hat den Vorteil, dass bei einem auftretenden Frequenz-Offset die Entscheidungsschwelle einer nachfolgenden Entscheidung, ob ein Korrelationswert ein Maximum darstellt, hoch gewählt werden kann, so dass auch bei einem verrauschten Signal noch eine sichere Detektion eines Bursts möglich ist.

Gemäß diesem Ausführungsbeispiel werden jeweils zwei aufeinander folgende Eingangssamples bzw. Teilkorrelationswerte Input(i) und Input(i+1) konjugiert komplex multipliziert, wodurch indirekt eine Phasendifferenz der beiden Samples berechnet wird. Wird der erste Teilkorrelationswert mit $z_1 = r_1 * \exp(j * \varphi_1)$ und der zweite Teilkorrelationswert mit $z_2 = r_2 * \exp(j * \varphi_2)$ bezeichnet, so ergibt sich die konjugiert komplexe Multiplikation des ersten Teilkorrelationswertes mit dem zweiten Teilkorrelationswert zu

$$z_1 * z_2^* = r_1 * r_2 * \exp(j * (\varphi_1 - \varphi_2)).$$

$* r_2 * \exp(j * (\varphi_1 - \varphi_2))$. $r_1$, $r_2$ gibt dabei die Amplitude der Teilkorrelationswerte und $\varphi_1 - \varphi_2$ die Phase der Teilkorrelationswerte an.

Die Ergebnisse der 15 konjugiert komplexen Multiplikationen werden summiert und der Absolutwert dieser Summe gebildet. Für den Ausgang Output, der dem Korrelationswert entspricht, ergibt sich somit:

$$\text{Output = abs(Input1 * conj(Input2) +}$$
$$\text{Input2 * conj(Input3) + ... + Input15 * conj(Input16)).}$$

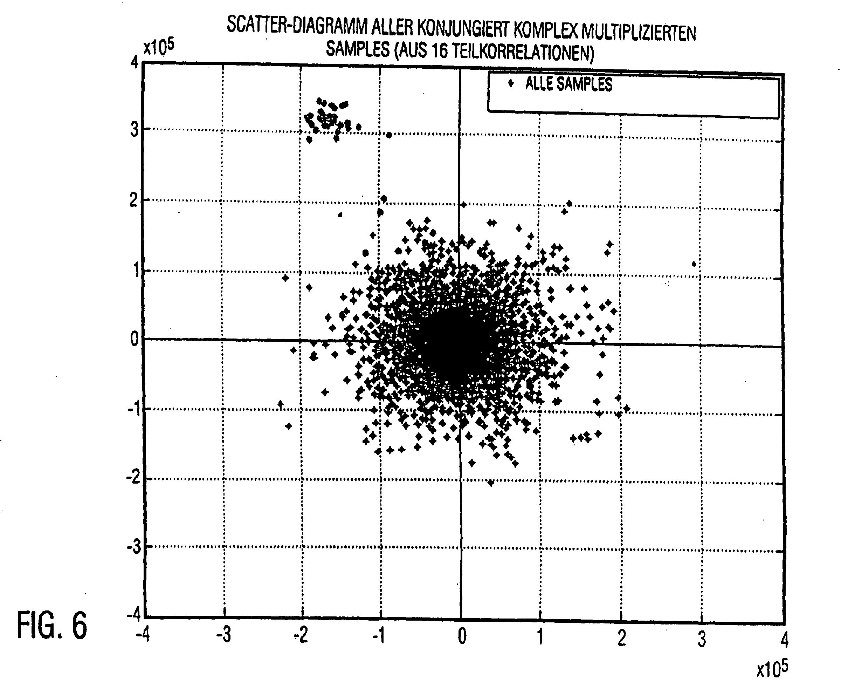

Fig. 6 zeigt ein Scatter-Diagramm aller gemäß diesem Ausführungsbeispiel konjugiert komplex multiplizierten Samples der 16 Teilkorrelatoren. Für das in Fig. 6 gezeigte Scatter-Diagramm wurden die Samples der 16 Teilkorrelationen aus Fig. 3 konjugiert komplex miteinander multipliziert. Im Gegensatz zu Fig. 3 können die Punkte, die das Maximum des Korrelationssignals bilden, von den restlichen Samples unterschieden werden.

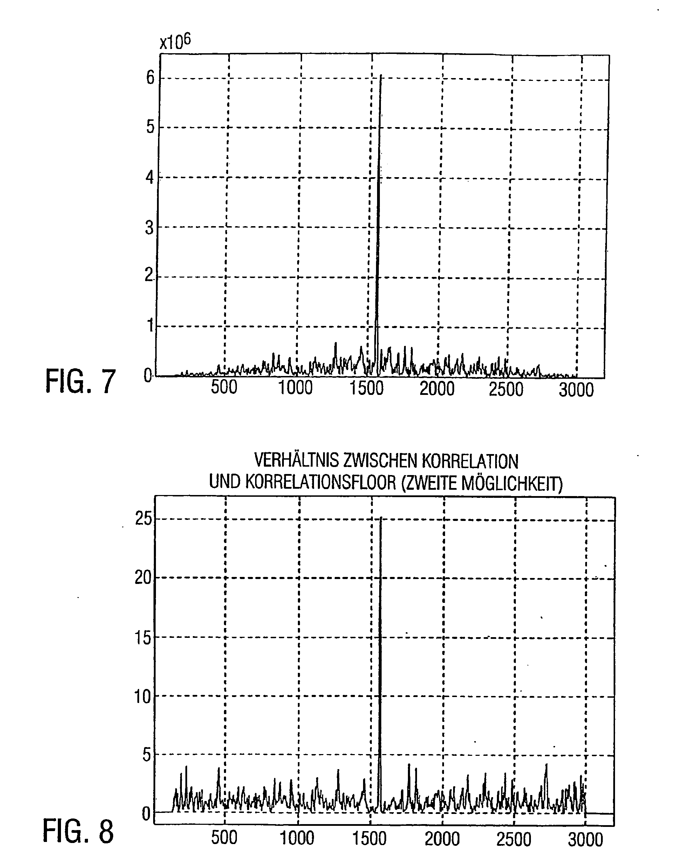

Fig. 7 zeigt das Ergebnis der Korrelation gemäß diesem Ausführungsbeispiel, wobei die Teilkorrelationsergebnisse gemäß diesem Ausführungsbeispiel unter Berücksichtigung der Phasenlage zwischen den Teilkorrelationssamples zusammengefügt wurden. Das in Fig. 7 gezeigte Korrelationssignal entspricht somit dem in Fig. 4 gezeigten Korrelationssignal, wobei das in Fig. 4 gezeigte Korrelationssignal durch die Summation der Absolutwerte der Teilkorrelationen ohne Berücksichtigung der Phasenlage zwischen den einzelnen Teilkorrelationssamples aufsummiert wurde. Bei dem in Fig. 7 gezeigten Korrelationssignal wurden die Phasenterme berücksichtigt.

Fig. 8 zeigt das Verhältnis zwischen Korrelation und Korrelationsfloor für das in Fig. 7 gezeigte Korrelationssignal. Während bei dem vorangegangenen Ausführungsbeispiel der Summation der Absolutwerte das Maximum im rauschfreien Fall und bei einem relativen Frequenzversatz von 30 ppm nur um das Dreifache aus dem Korrelationsfloor herausragt, übersteigt der Peak gemäß diesem Ausführungsbeispiel den Floor um das 25fache. Die Detektion eines Maximums ist daher mit der Methode gemäß diesem Ausführungsbeispiel sehr eindeutig.

Durch die Addition der komplexwertigen Ergebnisse der konjugiert komplexen Multiplikationen wird ein komplexwertiger Korrelationswert berechnet, dessen Absolutwert anschließend ermittelt wird. Aus Implementierungsgründen kann die Wurzelbildung bei Absolutwertberechnung weggelassen werden oder nur der Betrag von Real- und Imaginärteil addiert werden, d. h. statt $|z| = \sqrt{a^2 + b^2}$ kann $a^2 + b^2$ oder $|a| + |b|$ verwendet werden, wobei $z = a + j * b$ gilt.

Eine weitere Möglichkeit der Vereinfachung der Absolutwertbildung $|z| = \sqrt{a^2 + b^2}$ ist der sogenannte Betragsschätzer. Der Betragsschätzer schätzt den Betrag der komplexen Zahl $z = a + j * b$ mit folgender Gleichung:

$$|z| \approx \alpha * \max(|a|, |b|) + \beta * \min(|a|, |b|),$$

wobei $\alpha$ und $\beta$ Konstanten sind, deren Werte abhängig vom gewünschten maximalen Fehler und der Implementierungskomplexität zu wählen sind.

Bei Verwendung des Betragsschätzers mit festen $\alpha$ und $\beta$ bleiben die Größenordnungen des Korrelationssignals erhalten.

Für $\alpha = 1$ und $\beta = 1$ entspricht die Gleichung der Summation der Beträge von Realteil und Imaginärteil. Als günstigste Näherung für die Absolutwertbildung hat sich das Benützen des Betragsschätzers mit dem $(\alpha,\beta)$-Paar $\alpha = 1$ und $\beta = 0,25$ erwiesen.

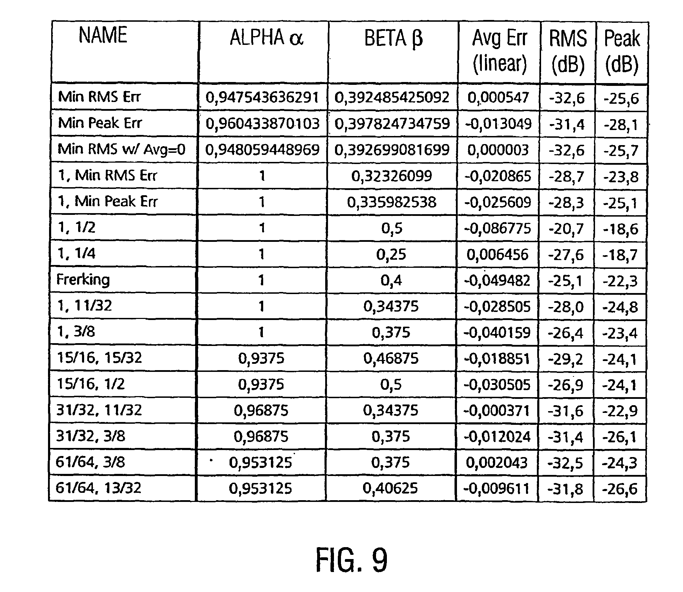

Mögliche Werte des Alpha*min+Beta*max-Betragsschätzer sind in der in Fig. 9 gezeigten Tabelle angegeben.

Die Anzahl der Teilkorrelationswerte ist nicht auf 16 begrenzt, sondern kann beliebige gewählt werden. Im Folgenden wird die Berechnung des Korrelationswertes unter der Berücksichtigung der Phasenlage der Teilkorrelationswerte bei einer Anzahl N von Teilkorrelationen beschrieben. Es werden zuerst die N Teilkorrelationen berechnet, wodurch sich komplexe Teilkorrelationswerte $r_{yx,n}[1]$ ergeben. n ist die Nummer der Teilkorrelation und 1 der Index des Wertes. Um die beschriebenen negativen Auswirkungen des Frequenzversatzes zu vermeiden, werden die Werte jeweils zweier aufeinander folgender Teilkorrelationen konjugiert komplex multipliziert:

$$\tilde{w}_n[1] = r_{yx,n}[1] \cdot \left(r_{yx,n-1}[1]\right)^*,$$

wobei $(.)^*$ die komplexe Konjugation darstellt. Hierbei wird für jeden Korrelationswert eine Multiplikation durchgeführt, d. h. für jeden Index 1. Für einen Index I besitzt jeder dieser Werte $\tilde{w}_n[l]$ für N = 1 bis N-1 die Phase $\alpha$, welche vom

komplexen Drehterm, also vom Frequenzversatz, herrührt. Ein Fehler bei der Phase $\alpha$ wird jedoch durch Rauschen und Verzerrungen vom Übertragungskanal hervorgerufen. Letztlich können die N-1 Werte $\tilde{w}_n[l]$ für n = 1 bis N-1 aufaddiert werden. Das Ergebnis sind die Korrelationswerte s[1] für jeden Index l. Diese Summation ist kohärent, d. h. die $\tilde{w}_n[l]$, d. h. das Nutzsignal, addieren sich amplitudenmäßig, während Rauschen und Signalverzerrungen sich nur leistungsmäßig addieren. Somit werden die relativen Anteile von Rauschen und Signalverzerrungen leistungsmäßig um den Faktor N-1 gedrückt. Bei einer derartigen Verknüpfung der N-1 Werte $\tilde{w}_n[l]$ mit festem 1, die auf den N Teilkorrelationswerten $r_{yx,n}[l]$ beruhen, beträgt der Processing Gain N-1.

Gemäß diesem Ausführungsbeispiel findet in der Berechnungsvorschrift für s[l] eine Gewichtung statt, die an ein Maximum Ratio Combining (MRC; MRC = maximum ratio combining) erinnert, weshalb die Berechnung von s[l] nur wenig vom möglichen Korrelationsgewinn verliert. Während des Empfangs des Sendesignals kann sich mehrmals der Störabstand SNIR (SNIR; SNIR = Signal-to-Noise plus Interference Ratio) ändern, da laufend störende Sender mit der Ausstrahlung eines Signals beginnen oder aufhören. Vereinfachend kann angenommen werden, dass das SNIR innerhalb einer Teilkorrelation näherungsweise konstant ist, und dass es sich auch zwischen zwei benachbarten Teilkorrelationen nur wenig ändert. Zur Herstellung des maximalen Korrelationsgewinns bei zeitvarianten SNIR kann die MRC-Methode benutzt werden, wobei für diese Gewichtung Rauschen plus Interferenz auf einen konstanten Wert normiert und dann das Empfangssignal mit seiner effektiven konjugiert komplexen Amplitude gewichtet wird, bevor die Summation zu s[l] durchgeführt wird.

Gemäß der vorliegenden Erfindung werden Korrelationswerte, die komplexwertig oder reellwertig ausgegeben werden, über den Umweg von Teilkorrelationen berechnet. Die Bestimmung eines Phasenunterschieds zwischen Teilkorrelationen ist eine implizite Schätzung des Frequenzversatzes zwischen den Wertefolgen. z[k] = y[k] * conj(x[m]) stellt ein Empfangssample y[k] dar, welches konjugiert komplex mit dem zugehörigen Sendesample x[m] multipliziert wurde, wodurch die Modulation entfernt wurde. Zur Berechnung eines Teilkorrelationswerts erfolgt gemäß einem Ausführungsbeispiel die Berechnung $r_{yx,n}[l] = \Sigma z[k]$, wobei der Index k über den für diese Teilkorrelationen n und den aktuellen Index 1 relevanten Bereich läuft. Gemäß diesem Ansatz werden nicht z[k] und conj(z[k-1]) miteinander multipliziert, dann davon die Phase bestimmt und zur Rauschminderung über mehrere solche Terme gemittelt, oder alternativ, zuerst Mittelung und dann Phasenbestimmung, sondern es erfolgt die konjugierte Multiplikation zwischen Teilkorrelationen $r_{yx,n}[l]$ und $r_{yx,n-1}[l]$.

Eine Gewichtung findet implizit statt. Bei der Berechnung von $\tilde{w}_n[l]$ wird jede Teilkorrelation $r_{yx,n}[l]$ für n = 1 bis N-1 mit $(r_{yx,n-1}[l])^*$ gewichtet. Dies ist wegen der Annahme einer geringen SNIR-Änderung zwischen benachbarten Teilkorrelationen näherungsweise die effektive konjugiert komplexe Amplitude von $r_{yx,n}[l]$, bis auf die Phasendifferenz $\alpha$, die sich aber durch obige Berechnungsvorschrift nicht destruktiv auf die Korrelationswerte s[l] auswirkt. Wie bei MRC gehen zuverlässige Teilkorrelationen somit stärker in die Summe s[l] ein als stark gestörte, unzuverlässige Teilkorrelationen.

Im weiteren Verlauf des Algorithmus braucht gemäß diesem Ausführungsbeispiel nur noch mit den Amplituden der Korrelationswerte s[l] gearbeitet werden. Außerdem können die entstehenden Werte in der Implementierung gegebenenfalls anders dargestellt werden, beispielsweise als Wurzel aus dem Korrelationswert s[l] oder als logarithmierte Werte, um den Speicherbedarf der Korrelationswerte s[l] zu verringern. Dies kann erforderlich sein, da durch die konjugierte Multiplikation der Dynamikbereich der Korrelationswerte im linearen Maßstab quadriert worden ist.

Die Kombination der Teilkorrelationen über die konjugierte Multiplikation und danach Mittelung über die Produkte ist robust gegen Frequenzversatz, wobei der Frequenzversatz weder explizit noch implizit geschätzt werden muss.

Gemäß einem weiteren Ausführungsbeispiel ist die in Fig. 1 gezeigte Verarbeitungseinrichtung ausgebildet, um einen mittleren Phasenunterschied zwischen den Teilkorrelationswerten zu bestimmen. Ferner ist die Verarbeitungseinrichtung ausgebildet, um einen bestimmten Teilkorrelationswert als Referenzkorrelationswert zu bestimmen und unverändert als verarbeiteten Teilkorrelationswert auszugeben. Die Phasenterme der weiteren Teilkorrelationswerte werden entsprechend dem mittleren Phasenunterschied bereinigt, so dass die Phasenterme der verarbeiteten weiteren Teilkorrelationswerte dem Phasenterm des Referenzkorrelationswerts entsprechen. Wird der erste Teilkorrelationswert als Referenzkorrelationswert definiert, so wird der zweite Teilkorrelationswert um den einfachen Phasenunterschied zurückgedreht, damit es zu einer Überlagerung des verarbeiteten zweiten Teilkorrelationswerts mit dem verarbeiteten ersten Teilkorrelationswert kommt. Der dritte Teilkorrelationswert wird um den doppelten mittleren Phasenunterschied zurückgedreht. Alternativ können die Teilkorrelationswerte auch vorgedreht werden oder vor der Drehung gespiegelt werden, damit eine Implementierung der Überlagerung möglich ist.

Wie anhand von Fig. 2 beschrieben, ist die Phasenänderung zwischen zwei aufeinander folgenden Teilkorrelationswerten $r_{yx,n}[l]$ idealerweise konstant. Wenn die Phasenänderung $\alpha$ korrekt geschätzt ist, dann können die N komplexen Teilkorrelationswerte folgendermaßen kohärent aufaddiert werden:

$$r'_{yx}[l] = \sum_{n=0}^{N-1} e^{-j\alpha \cdot n} r_{yx,n}[l]$$

Hier wird also jeweils der n-te Teilkorrelationswert um den Winkel $n \cdot \alpha$ zurückgedreht und auf den 0-ten Teilkorrelationswert aufaddiert. Das Ergebnis $r'_{yx}[l]$, welches mit dem Variablennamen corrvals bezeichnet ist, ist nahe am tatsächlichen Korrelationswert, der ohne einen Frequenzversatz, also ohne eine fortschreitende Phasendifferenz, vorliegen würde. Dies gilt für beliebige Indizes l = 0, ..., t_nocorrvals - 1, nicht nur für l = L. Somit kann durch die Verknüpfung der Teilkorrelationswerte die gesamte Kreuzkorrelationsfolge mit sehr guter Näherung berechnet werden.

Aus der Berechnungsvorschrift für $r'_{yx}[l]$ ist ersichtlich, dass bei der Summation der Teilkorrelationswerte nicht tatsächlich der Winkel $\alpha$, sondern ein komplexer Rotationsterm $e^{j\alpha}$ benötigt wird, der im Folgenden auch durch den Bezeichner comrotterm bezeichnet wird. Dieser Rotationsterm kann geschätzt werden, indem zuerst der Index 1 gefunden wird, für den die Phasenänderung $\alpha$ aus den Teilkorrelationswerten $r_{yx,n}[l]$ geschätzt werden soll. In diesem Ausführungsbeispiel wäre der korrekte Wert l = L. Diesen Index maxind0, im Folgenden als $\hat{l}$ bezeichnet, ist zu finden, indem die Beträge aller N Teilkorrelationswerte $r_{yx,n}[l]$ mit gleichem Index 1 aufaddiert und dann die maximale Betragssumme über alle Indizes l = 0, ..., t_nocorrvals - 1 gesucht wird:

$$\hat{l} = \arg\max_l \sum_{n=0}^{N-1} \left| r_{yx,n}[l] \right|$$

Für diesen Index $\hat{l}$ werden nun die N-1 Phasenänderungen zwischen jeweils zwei aufeinander folgenden Teilkorrelationen bestimmt. Diese Phasenänderung wird jedoch als komplexer Rotationsterm

$$w_n = r_{yx,n}[\hat{l}] \cdot r_{yx,n-1}^*[\hat{l}]$$

bestimmt, für n = 1, ..., N-1. Der Betrag dieser Rotationsterme $w_n$ ist im allgemeinen ungleich 1, aber ihr Betrag trägt der Größe und damit der Zuverlässigkeit der Teilkorrelationswerte Rechnung, die bei ihrer Berechnung beteiligt sind.

Der eigentlich gesuchte Rotationsterm $e^{j\alpha}$ wird durch Summation der N-1 Rotationsterme

$$e^{j\alpha} \propto w = \sum_{n=1}^{N-1} w_n$$

gewonnen. Hierbei wird implizit jeder beteiligte Rotationsterm mit seiner Zuverlässigkeit gewichtet. Dies bedeutet, dass ein großer Betrag einer hohen Zuverlässigkeit entspricht und somit ein hohes Gewicht in der Summe bewirkt.

Der benötigte Rotationsterm $e^{j\alpha}$ soll beim kohärenten Aufaddieren nicht verstärken und sollte deshalb den Betrag 1 besitzen. Er ist deshalb nicht gleich w, sondern nur proportional dazu. Eine Mittelung über N-1 Rotationsterme $w_n$ ergibt eine verbesserte Schätzung beim Vorhandensein von Störungen des Signals, unter anderem durch thermisches Rauschen und Phasenjitter, wenn einzelne Teilkorrelationswerte stark verfälscht sein können.

Der gesuchte Rotationsterm comrotterm wird durch Normierung aus w

$$e^{j\alpha} = \frac{w}{|w|}$$

erhalten.

Gemäß einem weiteren Ausführungsbeispiel ist die Vorrichtung zum Bestimmen eines Korrelationswertes Teil eines Empfängers, der ausgebildet ist, um einen T-Burst in Form der ersten Wertefolge zu empfangen. Dabei wird in jedem T-Burst ein Channelbit mit übertragen. Dieses Bit steuert einen Phasensprung nach der Hälfte des T-Bursts. Dies bedeutet, dass für Channelbit = 0 der T-Burst so gesendet wird, wie er auch im Empfänger als Korrelationssequenz in Form der zweiten Wertefolge vorliegt. Hingegen wird für Channelbit = 1 die zweite Hälfte des T-Bursts mit -1 multipliziert. Dieser mögliche Phasensprung um 180˚ erfolgt immer in der Burstmitte, auch für zero-padded T-Bursts, so wie sie in den Sender einprogrammiert werden bzw. wie sie im Empfänger als Korrelationssequenz vorliegen.

Gemäß diesem Ausführungsbeispiel wird jedoch nicht die zweite Hälfte des in B_samples vorliegenden T-Bursts mit -1 multipliziert, sondern diese Multiplikation erfolgt in einer zugrundeliegenden QPSK-Symbolfolge, die durch Samplen des Ausgangs eines Sendeimpulsformers zum T-Burst, in B_samples wird. Diese Tatsache kann in der Folge jedoch vernachlässigt werden, da der Einfluss auf den vorgestellten Algorithmus marginal ist, weil der Übergangsbereich zwischen den Bursthälften im Vergleich zu den Teilkorrelationslängen kurz ist und nur eine geringe Energie besitzt. Es kann also angenommen werden, dass die zweite Hälfte des Bursts mit +/- 1 multipliziert wird, wenn eine 0/1 übertragen werden soll.

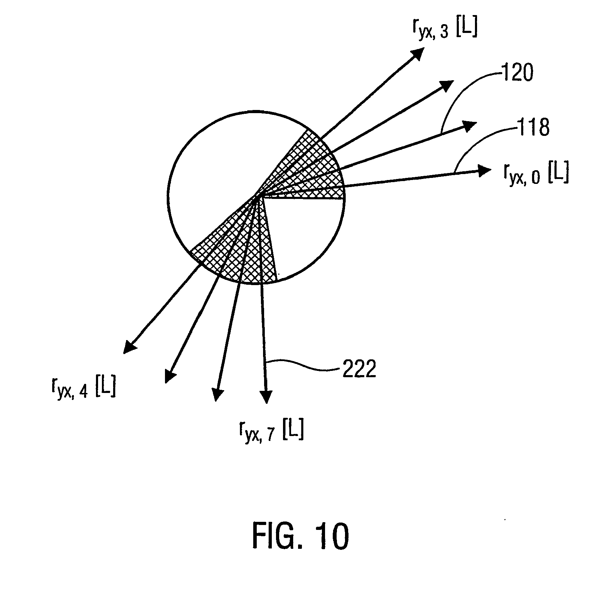

Aus Fig. 10 ist ersichtlich, dass die Teilkorrelationswerte $r_{yx,n}[l]$ einen ähnlichen Phasensprung um 180˚ mitmachen. Der Phasensprung ist zwischen den Teilkorrelationswerten $r_{yx,3}[L]$ und dem Teilkorrelationswert $r_{yx,4}[L]$ zu erkennen.

Um das Channelbit zu detektieren, muss also nur dieser Phasensprung detektiert werden.

Prinzipiell kann der Phasensprung aus $w_{N/2}$ abgelesen werden. Allerdings enthält dieser Rotationsterm $w_{N/2}$ auch einen Anteil, der der Phasenänderung $\alpha$ aufgrund des Frequenzversatzes entspricht. Dieser Anteil $\alpha$ muss kompensiert werden. Dafür bietet sich folgendes Vorgehen an:

Zuerst wird implizit die Phasenänderung $\alpha$ aus allen restlichen Rotationstermen geschätzt, bei denen kein Phasensprung aufgrund von Channelbits auftreten kann:

$$\tilde{w} = \sum_{n=1}^{N/2-1} w_n + \sum_{n=N/2+1}^{N-1} w_n$$

Eine Kompensation der Phasenänderung und eine Detektion des Channelbits, das geschätzte Channelbit werde mit transmitbit bezeichnet, erfolgt nun nach folgender Regel. transmitbit = 1 für $\mathrm{Re}(w_{N/2} \cdot \tilde{w}^*) < 0$, d. h. der Phasensprung nach der Kompensation ist zwischen 90˚ und 270˚. Sonst ist transmitbit = 0, d. h. der Phasensprung ist zwischen -90˚ und +90˚. Mit dieser Information kann nun auch noch der mittlere Rotationsterm mit in die Berechnung von w einbezogen werden. Für transmitbit == 1 gilt $w = \tilde{w} - w_{N/2}$ und für transmitbit == 0 gilt $w = \tilde{w} + w_{N/2}$.

Statt corrvals, also $r'_{yx}[l]$, für l = 0, ..., t_nocorrvals-1, wie beschrieben nach $r'_{yx}[l] = \sum_{n=0}^{N-1} e^{-j\alpha \cdot n} r_{yx,n}[l]$, zu berechnen, bietet sich eine Variante an, die zusätzlich auch den beschriebenen Phasensprung durch ein übertragenes Channelbit berücksichtigt und kompensiert:

$$r'_{yx}[l] = \sum_{n=0}^{N/2-1} e^{-j\alpha \cdot (n-N/2)} r_{yx,n}[l] \cdot (\pm 1) + \sum_{n=N/2}^{N-1} e^{-j\alpha \cdot (n-N/2)} r_{yx,n}[l]$$

$$= \sum_{n=0}^{N/2-1} e^{-j\alpha \cdot (N/2-n)} r_{yx,n}[l] \cdot (\pm 1) + r_{yx,N/2}[l] + \sum_{n=1}^{N/2-1} e^{-j\alpha \cdot (N/2-n)} r_{yx,N-n}[l]$$

Bei transmitbit == 1 wird die erste Summe mit -1 multipliziert, bei transmitbit == 0 wird mit +1 multipliziert. Eigentlich müsste die hintere Summe mit +/- 1 multipliziert werden, aber die dargestellte Variante ist gleichwertig.

Diese Berechnungsvorschrift hat den Vorteil, dass in der Implementierung weniger Delay auftritt, wenn eine Kaskadierung nach dem Horner-Schema verwendet wird, d. h. beispielsweise

$$\left(\left(r_{yx,0}[l] \cdot e^{j\alpha} + r_{yx,0}[l]\right) \cdot e^{j\alpha} + r_{yx,0}[l]\right) \cdot e^{j\alpha} + \dots .$$

Ein weiterer Vorteil liegt darin, dass die Phase im Rotationsterm in der Regel nicht fehlerfrei geschätzt werden kann, so dass bei der ersten Verknüpfungsvariante gemäß $r'_{yx}[l] = \sum_{n=0}^{N-1} e^{-j\alpha \cdot n} r_{yx,n}[l]$ bis zum (N-1)-fachen dieses Phasenfehlers in der Summe auftaucht, durch die Potenzierung der fehlerhaften Phase mit N-1. In der zuletzt dargestellten Variante, die eine verbesserte kohärente Aufaddierung der Teilkorrelationen darstellt, geht maximal das N/2-fache dieses Phasenfehlers ein.

Kann die Normierung von comrotterm $e^{j\alpha} = \frac{w}{|w|}$ nicht sehr genau durchgeführt werden, dann bedeutet eine Multiplikation mit dem Rotationsterm $e^{j\alpha}$ faktisch eine Multiplikation mit $C \cdot e^{j\alpha}$ mit $C \neq 1$, d. h. neben einer Phasendrehung immer auch eine Verstärkung oder Dämpfung einzelner Teilkorrelationswerte. Dies ändert unerwünschterweise die Gestalt der resultierenden Kreuzkorrelationsfolge. Diese Fehlerquelle wird mit der zuletzt vorgestellten Variante verringert, da die Verstärkung maximal N/2-fach erfolgt, statt (N-1)-fach bei der ersten Variante.

Gemäß einem weiteren Ausführungsbeispiel werden in der Vorrichtung zum Bestimmen eines Korrelationswertes weitere Werte in einem Teilkorrelationsalgorithmus berechnet, der in der Vorrichtung implementiert ist. Diese weiteren Werte werden beispielsweise in einer Ablaufsteuerung eines Empfängers benötigt.

Für die SNIR-Schätzung wird beispielsweise der maximale quadrierte Korrelationsbetrag maxsqcorr benötigt. Dies ist der Wert $\left|r'_{yx}[\hat{l}]\right|^2$ für das oben berechnete $\hat{l}$.

Ebenfalls für die SNIR-Schätzung wird die Energie recenerg des Empfangssignals über die Dauer des T-Bursts benötigt. Diese Energie kann durch die Formel

$$\text{recenerg} = \sum_{k=\hat{l}}^{\hat{l}+NM-1} \left|y[k]\right|^2$$

berechnet werden. Dabei muss beachtet werden, dass y[k] komplexwertig ist und deshalb die Leistung jedes Samples sich zusammensetzt aus der Leistung in der I-Komponente und der Q-Komponente. Es wird also die Energie für denjenigen Signalausschnitt berechnet, der sich optimal mit der Korrelationssequenz x[k] der Länge t_paddcorrseqlen = N * M deckt. Da diese Korrelationssequenz zero-padded ist, wird die Energie auch im idealen Fall nicht nur über das Fenster aufsummiert, welches das Nutzsignal enthält, sondern es wird auch über einen Signalteil summiert, der nur Rauschen plus gepaddete Zeros enthält. Die Summation über ein längeres Fenster des Empfangssignals als den eigentlichen T-Bursts würde zu einer fehlerhaften SNIR-Schätzung führen. Dieser systematische Fehler wird in der Ablaufsteuerung über den Korrekturterm SNIRcorrfact ausgeglichen.

Im Folgenden ist der Ablauf der Teilkorrelationsberechnung gemäß einem Verfahren beschrieben, wie es in der Vorrichtung zum Bestimmen eines Korrelationswertes gemäß einem Ausführungsbeispiel der vorliegenden Erfindung implementiert ist. Die beschriebenen Berechnungen können beispielsweise in Form einer Matlab-Funktion realisiert werden.

In einem ersten Schritt wird über den aktuellen Parameter t_choice der Ablaufsteuerung festgestellt, ob auf einen T-Burst 0 oder 1 des betrachteten Senders korreliert werden soll, d. h. es werden die korrekten Teilkorrelationssequenzen partcorrseqs für diesen Sender ausgewählt, wie bereits beschrieben kann der Sender zwischen zwei möglichen T-Burst auswählen. Die Teilkorrelationssequenzen entsprechen dabei den Teilmengen der zweiten Wertefolge gemäß Fig. 1.

In einem zweiten Schritt werden für jede der t_nopartcorrs Teilkorrelationen die jeweils t_nocorrvals Teilkorrelationswerte $r_{yx,n}[l]$ bestimmt.

In einem dritten Schritt wird maxind0 bestimmt.

In einem vierten Schritt wird $\tilde{w}$, in einem fünften Schritt das transmitbit und $w$ bestimmt, in einem sechsten Schritt wird comrotterm, in einem siebten Schritt corrvals und in einem achten Schritt maxsqcorr und recenerg bestimmt.

Gegebenenfalls können auch mehrere der oben angegebenen Schritte vereinfacht werden, beispielsweise durch suboptimale Implementierung, oder in ein weiteres Softwaremodul ausgelagert werden, wenn beispielsweise ihre FPGA-Implementierung zu aufwendig wäre. Wird der Algorithmus in einem FPGA implementiert, so müssen auf jeden Fall die rechenintensiven Operationen, das sind in erster Linie die Summationen über lange Vektoren, wie sie in den Teilkorrelationsberechnungen und in der Berechnung von recenerg vorkommen, im FPGA bleiben.

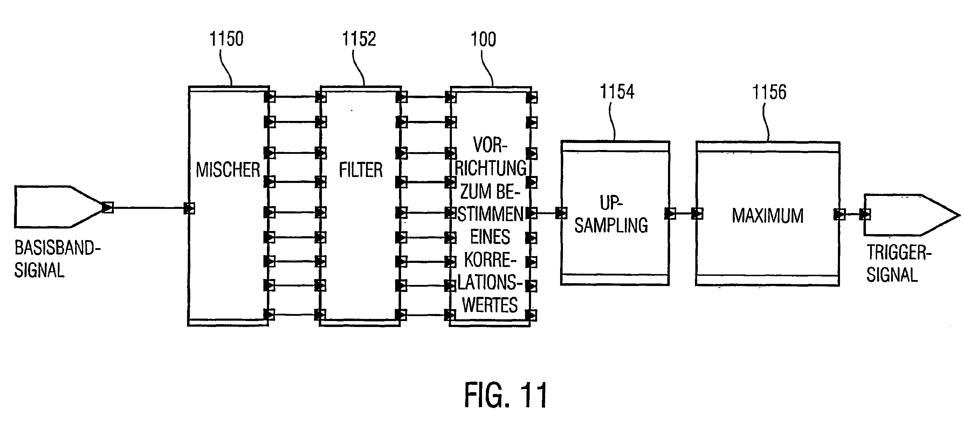

Fig. 11 zeigt ein Blockschaltbild eines Empfängers eines digitalen Übertragungssystems mit einer Vorrichtung 100 zum Bestimmen eines Korrelationswerts gemäß einem Ausführungsbeispiel der vorliegenden Erfindung. Ein Mischer 1150 gibt ein, in das (komplexe) Basisband gemischtes Empfangssignal in einem Sample-Takt B_clock an einen Filter 1152 weiter. Der Filter 1152 ist dem Mischer 1150 nachgeschaltet. Ein von dem Matched-Filter 1152 generiertes Empfangssignal wird in der nachfolgenden Vorrichtung 100 zum Bestimmen eines Korrelationswertes empfangen. Das Empfangssignal, das gemäß Fig. 1 der ersten Wertefolge entspricht, wird in der Vorrichtung 100 mit einer bekannten Signalfolge, die der zweiten Wertefolge entspricht, korreliert. Die Vorrichtung 100 ist ausgebildet, um fortlaufend Korrelationsbetragswerte bereitzustellen, aus denen nachfolgend das Maximum bestimmt wird. Die Korrelationsbetragswerte können in einem folgenden Upsample-Block 1154 upgesampelt werden. In der nachfolgenden Einrichtung 1156 zur Detektion eines Korrelationsmaximalwertes wird die Position der Korrelationsmaxima berechnet und ein Triggersignal ausgegeben.

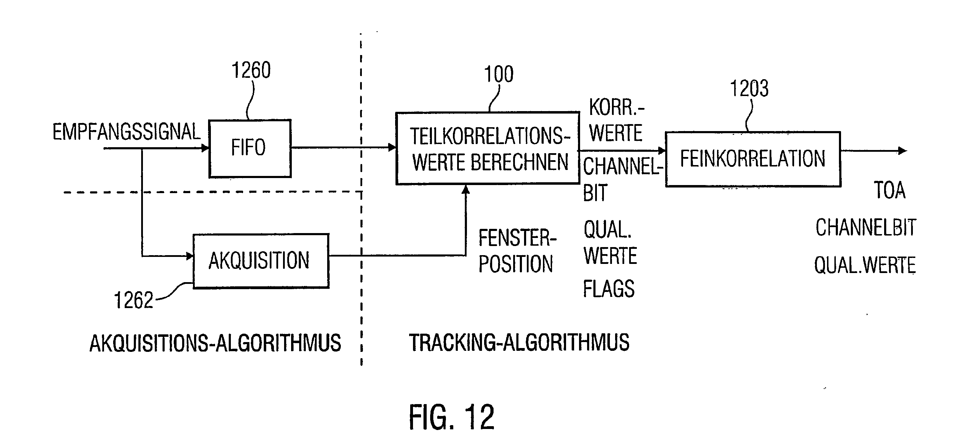

Fig. 12 zeigt eine graphische Blockdarstellung einer Einbindung einer Vorrichtung zum Bestimmen eines Korrelationswertes gemäß einem Ausführungsbeispiel der vorliegenden Erfindung in einem Empfänger. Die Vorrichtung 100 zum Bestimmen eines Korrelationswertes empfängt ein Empfangssignal über einen FIFO 1260. Eine Akquisitionseinrichtung 1262 gibt der Vorrichtung 100 eine Fensterposition an, über die die Teilkorrelationen in der Vorrichtung 100 berechnet werden. Die Vorrichtung 100 ist ausgebildet, um die bestimmten Korrelationswerte an eine Feinkorrelationseinrichtung 1203 bereitzustellen. Neben den Korrelationswerten stellt die Vorrichtung 100 Informationen über ein Channelbit, Qualitätswerte sowie Flags an die Feinkorrelationseinrichtung 1203 bereit. Die Feinkorrelationseinrichtung 1203 ist ausgebildet, um mit Hilfe einer Maximumentscheidung aus den Korrelationswerten ein Maximum zu bestimmen, aus diesem wiederum der Eintreffzeitpunkt eines in dem Empfangssignal enthaltenen Bursts ermittelt wird. Der Eingang basesig der in Fig. 12 gezeigten Signalverarbeitungskette stellt ein Empfangssignal aus einer Antenneneinheit dar, welches in komplexe Basisband heruntergemischt, und somit in I- und Q-Komponenten vorliegt und, in einem Sample-Takt B_clock gesampelt wurde. Diese Schnittstelle wird als Leitungen auf einem Korrelationsboard realisiert.

Für die Verarbeitung jedes Empfangssignals der in diesem Ausführungsbeispiel gezeigten Sender (nicht gezeigt in den Figuren) gliedert sich die in Fig. 12 gezeigte Signalverarbeitung grob in die folgenden Teile Akquisition, Teilkorrelationsberechnung und Feinkorrelation. Bei der Akquisition findet ein fortwährendes Suchen eines A-Bursts zum Aufsynchronisieren des Empfängers auf den Sender statt. In der Teilkorrelationsberechnung für das Tracking, das den rechenintensivsten Teil des Tracking-Algorithmus bildet, der nur auf Ausschnitten oder Fenstern des Empfangssignals arbeitet, wird der T-Burst im Raster B_samples gesucht. Die Feinkorrelationen werden im Überabtasttakt durchgeführt. Die Feinkorrelationseinrichtung 1203 arbeitet mit den Korrelationswerten aus der Teilkorrelationsberechnung 100 und sucht den T-Burst in einem sehr feinen Raster.

Der Akquisitionsalgorithmus nutzt A-Bursts im Empfangssignal, um die ungefähre Position eines T-Bursts im Empfangssignal vorherzusagen.

Vor dem Eingang des Tracking-Algorithmus wird das Empfangssignal mit einem FIFO gezielt verzögert. Aufgrund der Positionsvorhersage des Akquisitionsalgorithmus schneidet der Tracking-Algorithmus ein Fenster aus dem Empfangssignal heraus, innerhalb dessen der T-Burst gesucht wird.

Diese Suche erfolgt in zwei Schritten. Im ersten Schritt werden die Korrelationswerte für den T-Burst im Raster B_sample im vorhergesagten Fenster bestimmt. Die Berechnung erfolgt unter Verwendung von Teilkorrelationen, um den Einfluss von Frequenzversatz auf die Korrelationswerte deutlich zu verringern. Außerdem wird ein übertragenes Channelbit extrahiert und es werden mehrere Qualitätswerte für das Empfangssignal ermittelt.

Die Korrelationswerte, das geschätzte Channelbit, die Qualitätswerte sowie Signalisierungsflags werden verwendet, um die Korrelationswerte in einem sehr viel feineren Raster als B_sample zu interpolieren. Dies wird als Feinkorrelation bezeichnet. Dabei findet eine hochgenaue Schätzung der Time-of-Arrival also dem Eintreffzeitpunkt des Bursts statt. Außerdem werden aus den Korrelationswerten weitere Qualitätswerte bestimmt.

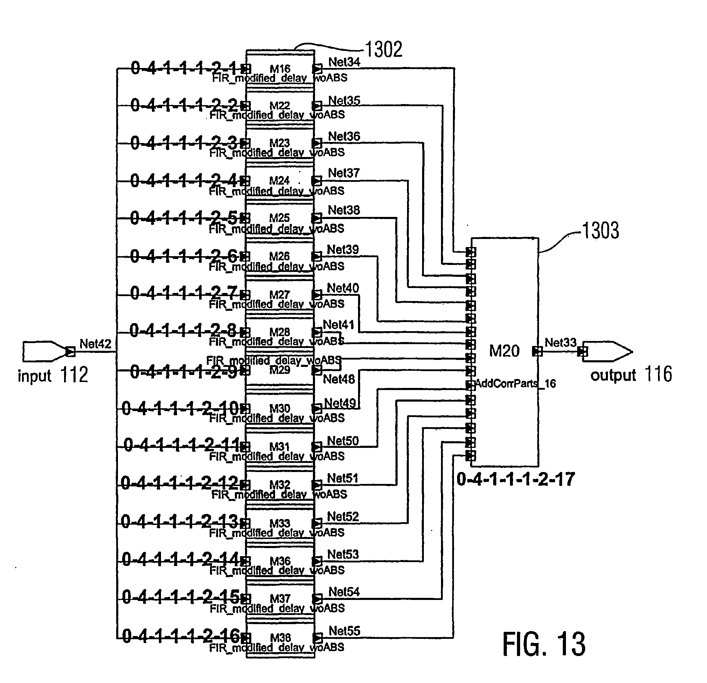

Fig. 13 zeigt eine schematische Darstellung einer Vorrichtung zum Bestimmen eines Korrelationswerts gemäß einem Ausführungsbeispiel der vorliegenden Erfindung. Gezeigt ist ein Aufbau eines Korrelationsfilters mit a_nopartcorrs = 16 Teilkorrelatoren 1302.

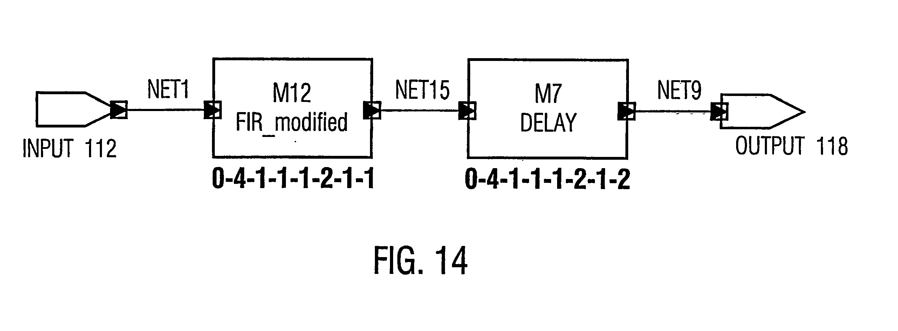

Zunächst wird das Eingangssignal Input 112 unverändert an die 16 Teilkorrelationsfilter gegeben, deren Aufbau in Fig. 14 gezeigt ist. Nachdem die gefilterten Signale aus den Teilkorrelatoren kommen, werden sie parallel an die 16 Ports der Verknüpfungseinrichtung 1303, die die Funktionen der in Fig. 1 gezeigten Verarbeitungseinrichtung sowie der Berechnungseinrichtung umfasst, gelegt. Der Ausgang der in Fig. 13 gezeigten Vorrichtung ist reell, da am Ende der Verknüpfungseinrichtung 1303 der Absolutwert des Signals Output 116 gebildet wird. Die Ausgänge der 16 Teilkorrelatoren sind komplex.

Fig. 14 zeigt eine schematische Darstellung eines der in Fig. 13 gezeigten Teilkorrelationsfilter 1302. Der Teilkorrelationsfilter ist ausgebildet, um eine erste Wertefolge 112 zu empfangen und einen ersten Teilkorrelationswert 118 auszugeben. Der Teilkorrelationsfilter weist ein Filter M12 sowie ein Verzögerungsglied M7 auf, die miteinander verbunden sind. Die Signale auf den Netzen net1, 9, 15 sind komplex und weisen eine Datenrate B_clock_48 auf. Das Blockschaltbild ist für alle a_nopartcorrs Teilkorrelationsfilter identisch. Zunächst wird das angelegte Signal im Block 0-4-1-1-1-2-1-1 gefiltert und anschließend im Block 0-4-1-1-1-2-1-2 verzögert. Unterschiede zwischen den Teilkorrelationsfiltern bestehen in den unterschiedlichen Filterkoeffizienten und in den unterschiedlichen Verzögerungen. Die unterschiedlichen Filterkoeffizienten und die unterschiedlichen Verzögerungen hängen von den entsprechenden Teilmengen der Wertefolgen ab. Die Verzögerungen werden benötigt, damit alle Teilkorrelationen zeitlich zusammenpassen und nach dieser Ebene wieder zu einem Korrelationssignal zusammengefügt werden können.

Die Aufteilung der Filterkoeffizienten erfolgt nach folgendem Schema. Die reellen Elemente des Akquisitions-Bursts a_burstseq sind real_a_burstseq. Die imaginären Elemente des Akquisitions-Bursts a_burstseq, welche nur im Falle einer quaternären Referenzsequenz existieren, sind i-mag_a_burstseq. Die Länge der Korrelationssequenzen real_a_burstseq und imag_a_burstseq ist a_burstlen. a_nopartcorrs ist die Anzahl der Teilkorrelatoren. part-

$$\texttt{corrlen} = \left\lceil \frac{a\_burstlen}{a\_nopartcorrs} \right\rceil$$ ist die Anzahl der Filterkoeffizienten in einem Teilfilter. Beispielsweise besitzt damit das Teilkorrelationsfilter 1 der Ebene 0-4-1-1-1-2-1 die Koeffizienten:

real_a_burstseq(a_burstlen bis a_burstlen - partcorrlen + 1),

conj(imag_a_burstseq(a_burstlen bis a_burstlen - partcorrlen + 1));

Das Teilkorrelationsfilter 2 der Ebene 0-4-1-1-1-2-2 besitzt die Koeffizienten:

real_a_burstseq(a_burstlen - partcorrlen bis a_burstlen - 2 * partcorrlen + 1),

conj(imag_a_burstseq(a_burstlen - partcorrlen bis a_burstlen - 2 * partcorrlen + 1));

Und das Korrelationsfilter n besitzt die Koeffizienten:

real_a_burstseq(a_burstlen - (n - 1) * partcorrlen bis a_burstlen - n * partcorrlen + 1),

conj(imag_a_burstseq(a_burstlen - (n - 1) * partcorrlen bis a_burstlen - n * partcorrlen + 1)).

Das Teilkorrelationsfilter a_nopartcorrs besitzt im Falle von 16 Teilkorrelatoren die Koeffizienten:

real_a_burstseq(partcorrlen bis 1, zeros(1 bis a_nopartcorrs * partcorrlen - a_burstlen)),

conj(imag_a_burstseq(partcorrlen bis 1), zeros(1 bis a_nopartcorrs * partcorrlen - a_burstlen)).

Die Anzahl der Delay-Elemente ist ebenfalls abhängig von der Nummer des Teilkorrelationsfilters. Es müssen im Teilkorrelationsfilter 1 keine, im Teilkorrelationsfilter 2 partcorrlen, im Teilkorrelationsfilter n (n - 1) * partcorrlen und im Teilkorrelationsfilter a_nopartcorrs (a_nopartcorrs - 1) * partcorrlen Nullen eingefügt werden.

Mit a_corrburst sei folgendes Signal bezeichnet.
a_corrburst = [flipr(conj(a_burstseq)), zeros(1, a_nopartcorrs * partcorrlen - a_burstlen)].

Somit gehören zum Teilkorrelationsfilter ii die Koeffizienten a_corrburst((ii - 1) * partcorrlen + 1 bis ii * partcorrlen).

Eine Schätzung des Frequenzversatzes coffsestppm erfolgt über die Formel
coffsestppm = winkel(comrotterm)/(2*Π*t_partcorrseqlen/B_clock)/carfreq*1e6.

Es wird die mittlere Quadratwurzel mit der Amplitude des empfangenen komplexen Signals während der kompletten Korrelationssequenz, also der Verkettung aller Teilkorrelationen geschätzt. Es wird beobachtet, dass der T-Burst deutlich kürzer als die Korrelationssequenz sein kann, so dass die resultierende RMS während der Korrelationssequenz viel geringer ist, als es sein würde, wenn es nur während des T-Bursts gemessen würde.

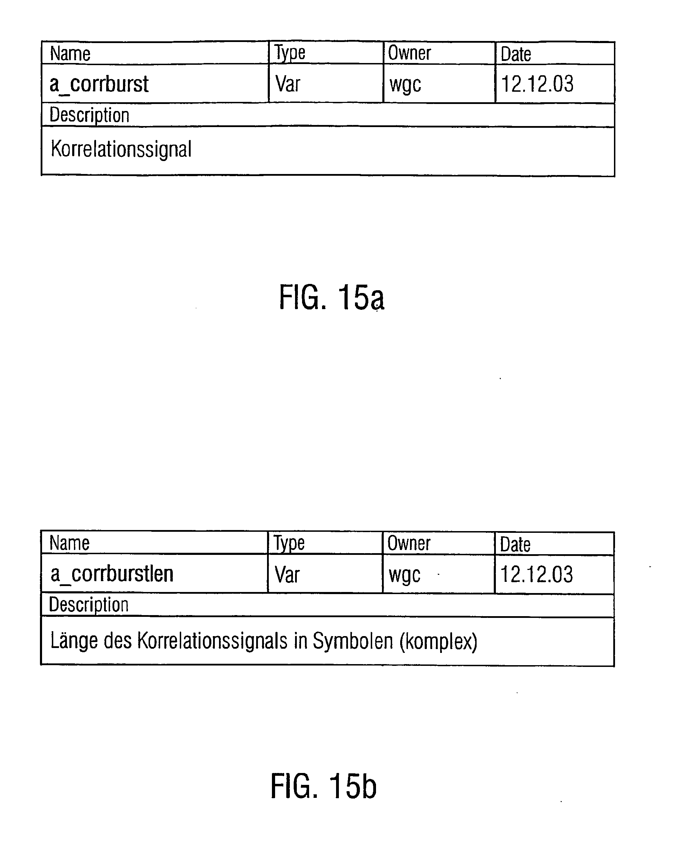

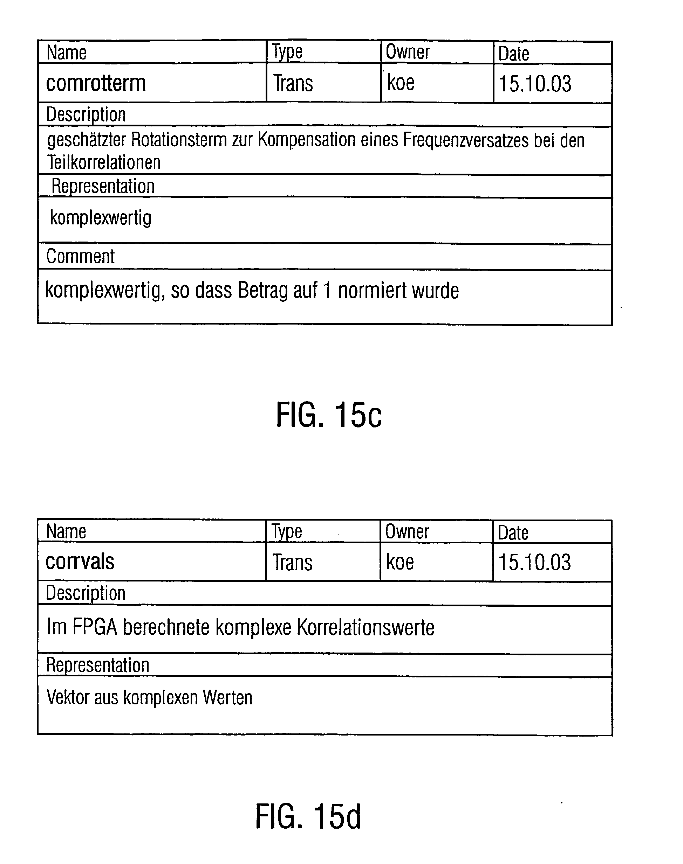

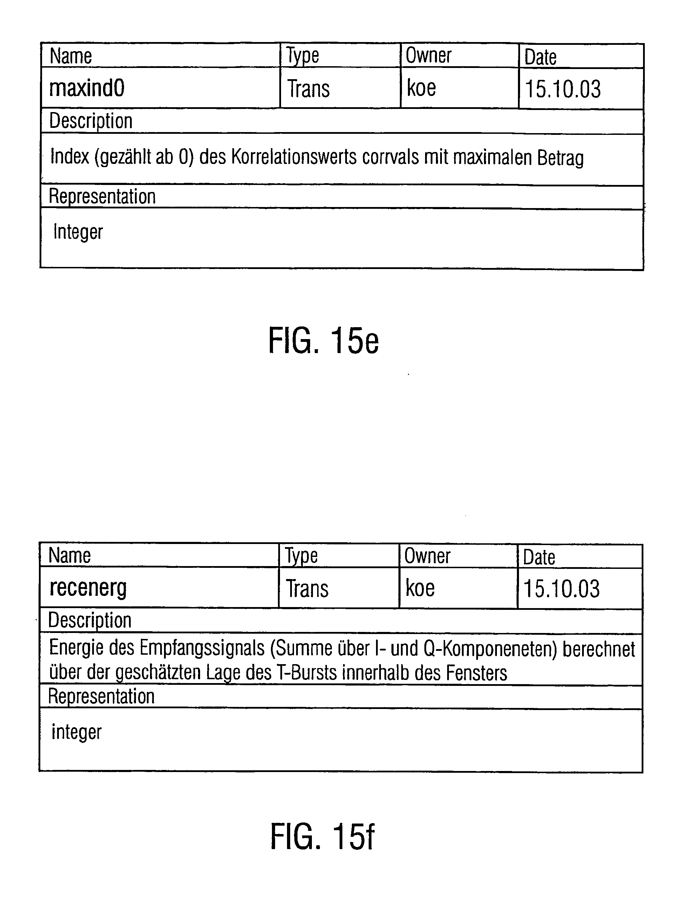

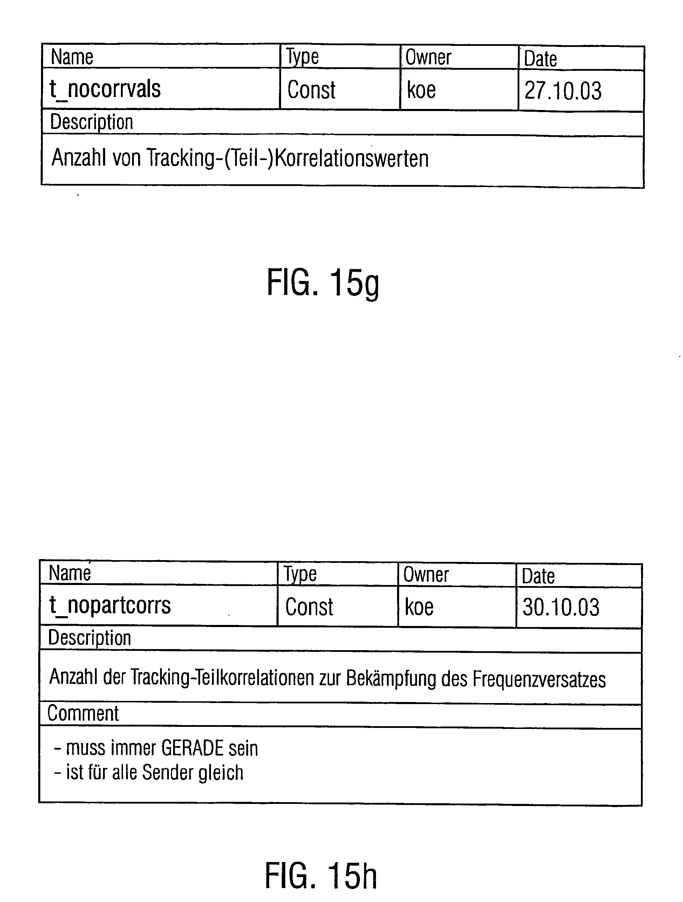

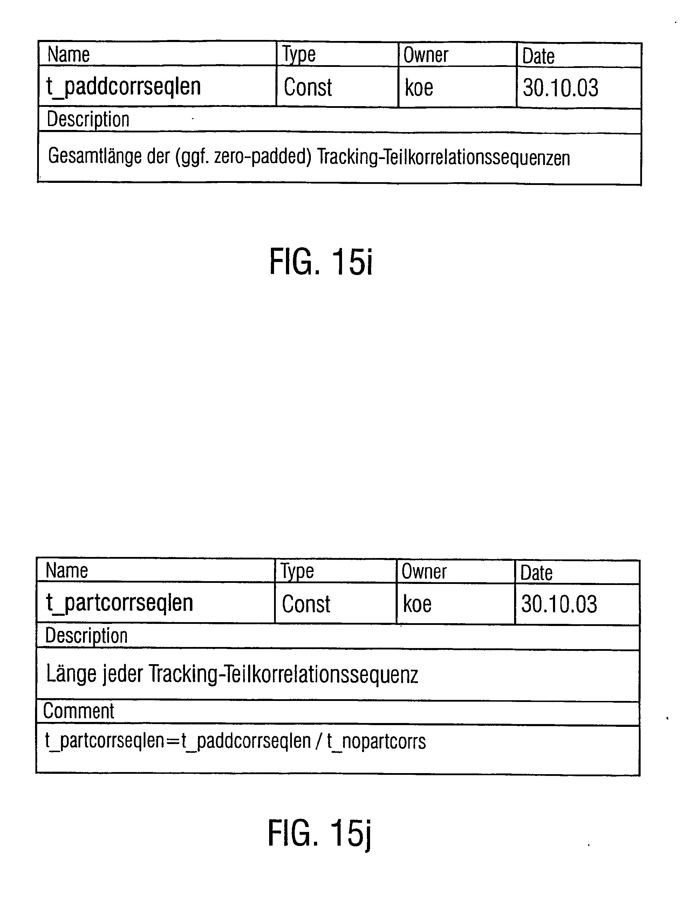

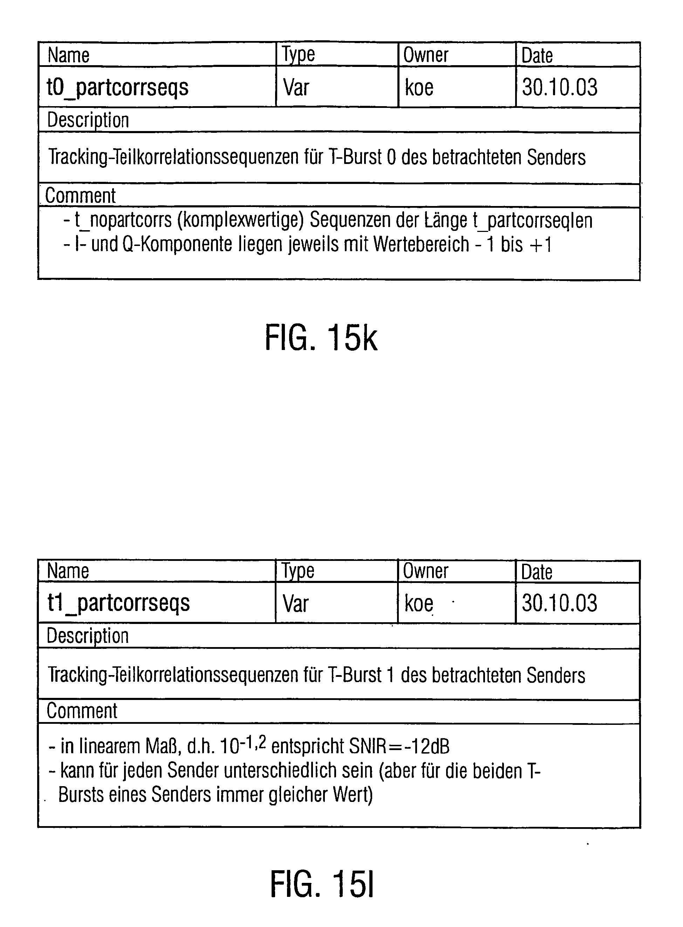

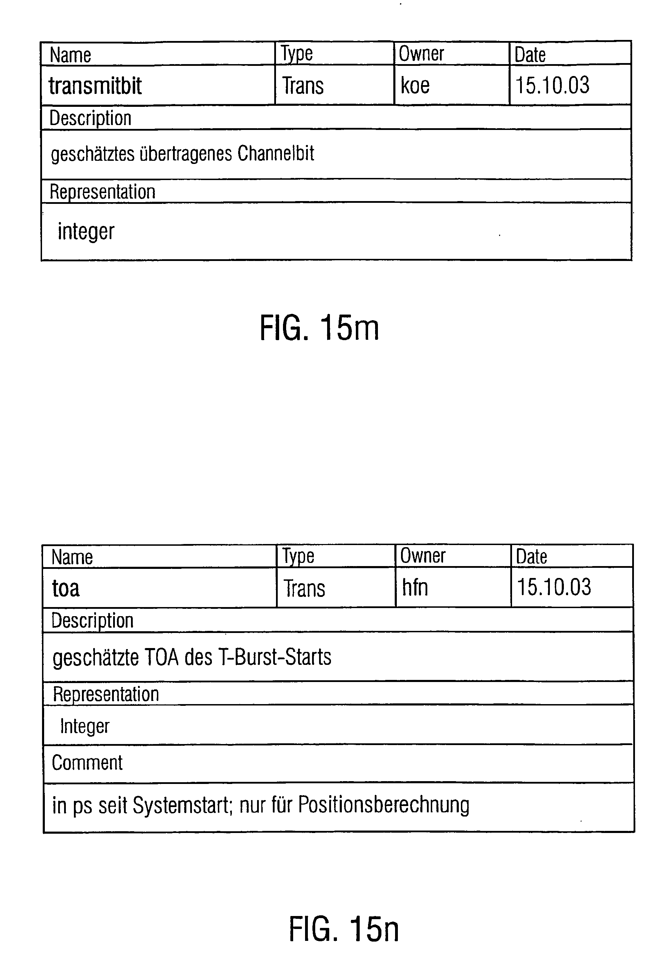

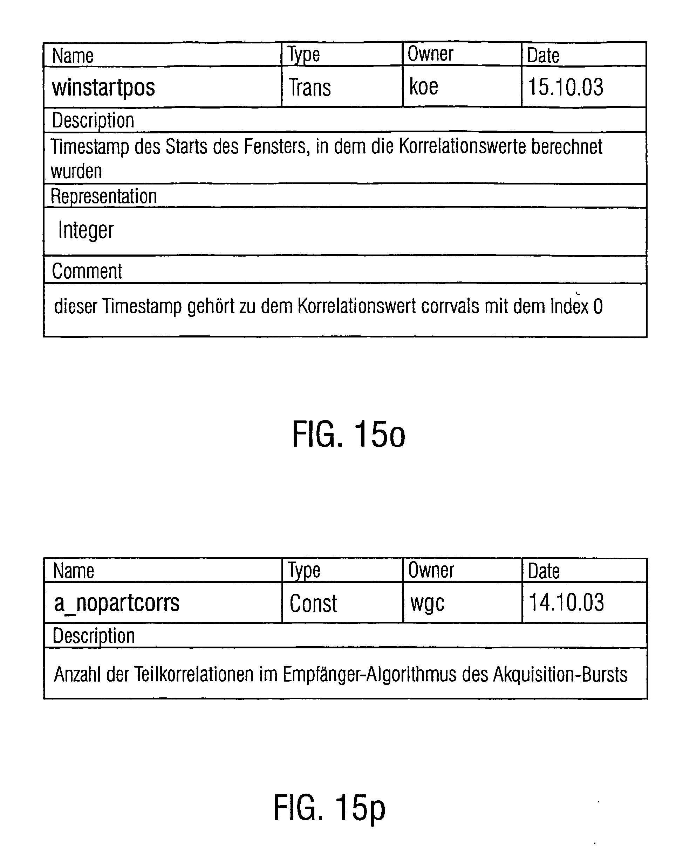

In den nachfolgenden Fig. 15a bis 15p werden die vorangegangenen Parameter definiert.

Der Parameter a_corrburst definiert das Korrelationssignal, das gemäß Fig. 1 der ersten Wertefolge entspricht.

Der Parameter a_corrburstlen definiert die Länge des Korrelationssignals in Symbolen.

Der Parameter comrotterm definiert den geschätzten Rotationsterm zur Kompensation eines Frequenzversatzes bei den Teilkorrelationen.

Der Parameter corrvals definiert im FPGA berechnete komplexe Korrelationswerte.

Der Parameter maxind0 definiert einen Index, gezählt ab Null, des Korrelationswerts corrvals mit maximalem Betrag.

Der Parameter recenerg definiert die Energie des Empfangssignals als Summe über I- und Q-Komponenten berechnet über der geschätzten Lage des T-Bursts innerhalb des Fensters.

Der Parameter t_nocorrvals definiert die Anzahl von Tracking-Teilkorrelationswerten.

Der Parameter t_nopartcorrs definiert die Anzahl der Tracking-Teilkorrelationen zur Bekämpfung des Frequenzversatzes.

Der Parameter t_paddcorrseqlen definiert die Gesamtlänge der, gegebenenfalls zero-padded, Tracking-Teilkorrelationssequenzen. Der Parameter muss ein Vielfaches von t_nopartcorrs sein. Er sollte ungefähr t_burstmaxlen oder notfalls kleiner sein und für alle Sender gleich sein.

Der Parameter t_partcorrseqlen definiert die Länge jeder Tracking-Teilkorrelationssequenz.

Der Parameter t0_partcorrseqs definiert die Tracking-Teilkorrelationssequenzen für T-Burst 0 des betrachteten Senders.

Der Parameter t1_partcorrseqs definiert Tracking-Teilkorrelationssequenzen für T-Burst 1 des betrachteten Senders.

Der Parameter transmitbit definiert das geschätzte übertragene Channelbit.

Der Parameter toa definiert den geschätzten Eintreffzeitpunkt TOA des T-Burst-Starts.

Der Parameter winstartpos definiert den Timestamp des Starts des Fensters, in dem die Korrelationswerte berechnet wurden.

Der Parameter a_nopartcorrs definiert die Anzahl der Teilkorrelationen im Empfangsalgorithmus des Akquisitions-Bursts.

Obwohl in den vorangegangenen Ausführungsbeispielen auf ein digitales Kommunikationssystem Bezug genommen wurde, kann der erfindungsgemäße Ansatz zur Bestimmung eines Korrelationswerts für beliebige Wertefolgen genutzt werden. die Teilkorrelationswerte können durch Kreuzkorrelationen, Autokorrelationen oder andere Korrelationsarten ermittelt werden. Der erfindungsgemäße Ansatz ist insbesondere für Korrelationsfolgen mit komplexen Werten einsetzbar, funktioniert aber auch für reellwertige Korrelationsfolgen.

Abhängig von den Gegebenheiten kann das erfindungsgemäße Verfahren zum Bestimmen eines Korrelationswertes in Hardware oder in Software implementiert werden. Die Implementierung kann auf einem digitalen Speichermedium, insbesondere einer Diskette oder CD mit elektronisch auslesbaren Steuersignalen, erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung (100) zum Bestimmen eines Korrelationswerts aus einer Korrelation zwischen einer ersten Wertefolge mit komplexen Werten und einer zweiten Wertefolge mit komplexen Werten, mit folgenden Merkmalen:

   einer Korrelationseinrichtung (102), die ausgebildet ist, um einen ersten Teilkorrelationswert (118) aus einer Korrelation zwischen einer ersten Teilmenge der ersten Wertefolge (112) und einer ersten Teilmenge der zweiten Wertefolge (114), und einen zweiten Teilkorrelationswert (120) aus einer Korrelation zwischen einer zweiten Teilmenge der ersten Wertefolge (112) und einer zweiten Teilmenge der zweiten Wertefolge (114) zu ermitteln;
   einer Verarbeitungseinrichtung (104), die ausgebildet ist, um aus dem zweiten Teilkorrelationswert einen verarbeiteten zweiten Teilkorrelationswert (124) mit einem an einen Phasenterm des ersten Teilkorrelationswerts (118) angepassten Phasenterm zu ermitteln; und
   einer Berechnungseinrichtung (106), die ausgebildet ist, um unter Verwendung des verarbeiteten zweiten Teilkorrelationswerts den Korrelationswert (116) zu bestimmen,

   wobei die Verarbeitungseinrichtung (104) ausgebildet ist, um einen Phasenunterschied zwischen den Teilkorrelationswerten (118, 120) zu bestimmen und den verarbeiteten zweiten Teilkorrelationswert (124) durch Drehen des zweiten Teilkorrelationswerts (120) um den so bestimmten Phasenunterschied zu ermitteln, und
   wobei die Berechnungseinrichtung (106) ausgebildet ist, um den Korrelationswert (116) durch Summation des ersten Teilkorrelationswerts und des verarbeiteten zweiten Teilkorrelationswerts zu bestimmen.

2. Vorrichtung gemäß Anspruch 1, wobei die Korrelation-einrichtung (102) ausgebildet ist, um die Teilmengen gemäß einer gemeinsamen Uterteilungsvorschrift aus der ersten und zweiten Wertefolge (112, 114) zu ermitteln.

3. Vorrichtung gemäß einem der Ansprüche 1 oder 2 wobei die Vorrichtung ausgelegt ist, um die erste Wertefolge (114) zu speichern oder zu empfangen.

4. Vorrichtung gemäß einem der Ansprüche 1 bis 3, wobei der Phasenunterschied eine mittlere Phasendifferenz swischen den Teilkorrelationswerten ist, und wobei die Verarbeitungseinrichtung ausgelegt ist, um Phasenterme des verarbeiteten zweiten Teilkorrelationswerts und eines weiteren, aus einer Korrelation zwischen einer weiteren Teilmenge der ersten Wertefolge und einer weiteren Teilmenge der zweiten Wertefolge ermittelten Teilkorrelationswertes entsprechend der mittleren Phasendifferenz zu reduzieren, um die Phasenterme des verarbeiteten zweiten und weiteren Teilkorrelationswerts anzupassen.

5. Vorrichtung gemäß einem der Ansprüche 1 bis 4, wobei der Phasenunterschied eine mittlere Phasendifferenz swischen den Teilkorrelationwerten ist, und wobei die Verarbeitungseinrichtung ausgelegt ist, um den Phasenterm des verarbeiteten zweiten Teilkorrelationwerts entsprechend der mittleren Phasendifferenz zu reduzieren und um einen Phasenterm eines weiteren, aus einer Korrelation zwischen einer weiteren Teilmenge der ersten Wertefolge und einer weiteren Teilmenge der zweiten Wertefolge ermittelten Teilkorrelationswertes entsprechend der mittleren Phasendifferenz zu erhöhen, um die Phasenterme des verarbeiteten zweiten und weiteren Teilkorrelationswertes an den Phasenterm des ersten Teilkorrelationswerts anzupassen.

6. Vorrichtung gemäß einem der Ansprüche 1 bis 5, wobei die Verarbeitungseinrichtung (104) ausgebildet ist, um den Phasenunterschied als normierte Summe aus komplex konjugierten Multiplikationen benachbarter Teilkorrelationswerte zu bestimmen.

7. Vorrichtung gemäß einem der Ansprüche 1 bis 6, wobei die erste Wertefolge Teil einer Empfangsfolge ist, und wobei die zweite Wertefolge Teil einer Sendefolge ist, wobei die Empfangsfolge und die Sendefolge einen Frequenzversatz aufweisen, und wobei die Verarbeitungseinrichtung ausgebildet ist, um den Frequenzversatz zu bestimmen.

8. Verfahren zum Bestimmen eines Korrelationswerts in einem Empfänger, aus einer Korrelation zwischen einer ersten Wertefolge mit komplexen Werten und einer zweiten Wertefolge mit komplexen Werten, wobei die erste Wertefolge Teil einer von dem Empfänger empfangenen Empfangsfolge ist, das folgende Schritte aufweist:

   Ermitteln eines ersten Teilkorrelationswerts (118) aus einer Korrelation zwischen einer ersten Teilmenge der ersten Wertefolge (112) und einer ersten Teilmenge der zweiten Wertefolge (114), und Ermitteln eines zweiten Teilkorrelationswerts (120) aus einer Korrelation zwischen einer zweiten Teilmenge der ersten Wertefolge (112) und einer zweiten Teilmenge der zweiten Wertefolge (114);
   Ermitteln eines verarbeiteten zweiten Teilkorrelationswerts mit an einen Phasenterm des ersten Teilkorrelationswerts (118) angepasstem Phasenterm aus dem zweiten Teilkorrelationswert; und
   Bestimmen des Korrelationswerts unter Verwendung des verarbeiteten zweiten Teilkorrelationswerts,

   wobei das Ermitteln des verarbeiteten zweiten Teilkorrelationswertes ein Bestimmen eines Phasenunterschieds zwischen den Teilkorrelationswerten (118, 120) sowie ein Ermitteln des verarbeiteten zweiten Teilkorrelationswertes durch Drehen des zweiten Teilkorrelationswerts um den so bestimmten Phasenunterschied umfasst; und
   wobei das Bestimmen des Korrelationswerts eine Summation des ersten Teilkorrelationswerts und des verarbeiteten zweiten Teilkorrelationswerts umfasst.

9. Vorrichtung (100) zum Bestimmen eines Eintreffzeitpunkts eines Signals aus einer Korrelation zwischen einer ersten Wertefolge mit komplexen Werten und einer zweiten Wertefolge mit komplexen Werten, mit folgenden Merkmalen:

   einer Korrelationseinrichtung (102), die ausgebildet ist, um einen ersten Teilkorrelationswert (118) aus einer Korrelation zwischen einer ersten Teilmenge der ersten Wertefolge (112) und einer ersten Teilmenge der zweien Wertefolge (114), einen zweiten Teilkorrelationswert (120) aus einer Korrelation zwischen einer zweiten Teilmenge der ersten Wertefolge (112) und einer zweiten Teilmenge der zweiten Wertefolge (114) sowie einen dritten Teilkorrelationswert aus einer Korrelation zwischen einer dritten Teilmenge der ersten Wertefolge und einer dritten Teilmenge der zweiten Wertefolge zu ermitteln;

einer Verarbeitungseinrichtung (104), die ausgebildet ist, um aus dem ersten Teilkorrelationswert, dem zweiten Teilkorrelationswert und dem dritten Teilkorrelationswert einen verarbeiteten ersten Teilkorrelationswert (122) und einen verarbeiteten zweiten Teilkorrelationswert zu ermitteln; und

einer Berechnungseinrichtung (106), die ausgebildet ist, um unter Verwendung der verarbeiteten Teilkorrelationswerte den Korrelationswert (116) zu bestimmen,

wobei die Verarbeitungseinrichtung (104) ausgebildet ist, um den verarbeiteten ersten Teilkorrelationswert (122) aus einer konjugiert komplexen Multiplikation des ersten und zweiten Teilkorrelationswerts (118, 120) zu ermitteln,

und um den verarbeiteten zweiten Teilkorrelationswert aus einer konjugiert komplexen Multiplikation des zweiten und des dritten Teilkorrelationswerts zu ermitteln;

wobei die Berechnungseinrichtung ausgebildet ist, um den verarbeiteten ersten Teilkorrelationswert und den verarbeiteten zweiten Teilkorrelationswert zu addieren , um einen komplexwertigen Korrelationswert zu berechnen; und

wobei die Vorrichtung ferner ausgelegt ist, um ein Betragsmaximum des Korrelationswerts zu detektieren, um den Eintreffzeitpunkt des Signals aus dem Betragsmaximum des Korrelationswerts zu bestimmen.

**10.** Verfahren zum Bestimmen eines Eintreffzeitpunkts eines Signals aus einer Korrelation zwischen einer ersten Wertefolge mit komplexen Werten und einer zweiten Wertefolge mit komplexen Werten, wobei das Verfahren folgende Schritte aufweist:

Ermitteln eines ersten Teilkorrelationswerts (118) aus einer Korrelation zwischen einer ersten Teilmenge der ersten Wertefolge (112) und einer ersten Teilmenge der zweiten Wertefolge (114), Ermitteln eines zweiten Teilkorrelationswerts (120) aus einer Korrelation zwischen einer zweiten Teilmenge der ersten Wertefolge (112) und einer zweiten Teilmenge der zweiten Wertefolge (114), sowie Ermitteln eines dritten Teilkorrelationswertes aus einer Korrelation zwischen einer dritten Teilmenge der ersten Wertefolge und einer dritten Teilmenge der zweiten Wertefolge;

Ermitteln eines verarbeiteten ersten Teilkorrelationswerts mit angepasstem Phasenterm aus dem ersten Teilkorrelationswert und dem zweiten Teilkorrelationswert durch Ausführen einer konjugiert komplexen Multiplikation des ersten Teilkorrelationswertes und des zweiten Teilkorrelationswertes;

Ermitteln eines verarbeiteten zweiten Teilkorrelationswertes durch Ausführen einer konjugiert komplexen Multiplikation des zweiten Teilkorrelationswertes und des dritten Teilkorrelationswertes; und

Bestimmen des Korrelationswerts unter Verwendung des verarbeiteten ersten und zweiten Teilkorrelationswerts,

wobei das Bestimmen des Korrelationswertes folgende Schritte aufweist:

Summieren des verarbeiteten ersten Teilkorrelationswertes und des verarbeiteten zweiten Teilkorrelationswertes, um einen komplexwertigen Korrelationswert zu berechnen; und

Detektieren eines Betragsmaximums des Korrelationswerts, um den Eintreffzeitpunkt des Signals aus dem Betragsmaximum des Korrelationswerts zu bestimmen.

**11.** Computerprogramm mit einem Programmcode zur Durchführung des Verfahrens gemäß Anspruch 8 oder Anspruch 10, wenn das Computerprogramm auf einem Computer abläuft.

**Claims**

**1.** Device (100) for determining a correlation value from a correlation between a first sequence of values with complex values and a second sequence of values with complex values, having the following features:

a correlator (102) configured to calculate a first partial correlation value (118) from a correlation between a first subset of the first sequence of values (112) and a first subset of the second sequence of values (114), and a second partial correlation value (120) from a correlation between a second subset of the first sequence of values (112) and a second subset of the second sequence of values (114);

a processor (104) configured to calculate a processed second partial correlation value (124), with a phase term adjusted to a phase term of the first partial correlation value (118), from the second partial correlation value; and

a calculator (106) configured to determine the correlation value (116) using the processed second partial correlation value,

wherein the processor (104) is configured to determine a phase difference between the partial correlation values (118, 120) and to calculate the processed second partial correlation value (124) by rotating the second partial correlation value (120) by the phase difference thus determined; and

wherein the calculator (106) is configured to determine the correlation value (116) by addition of the first partial correlation value and the processed second partial correlation value.

2. Device according to claim 1, wherein the correlator (102) is configured to calculate the subsets from the first and second sequences of values (112, 114) in accordance with a common subdivision specification.

3. Device according to either claim 1 or claim 2, wherein the device is configured to receive the first sequence of values (112) and to store or to receive the second sequence of values (114).

4. Device according to any one of claims 1 to 3, wherein the phase difference is a mean phase difference between the partial correlation values, and wherein the processor is configured to reduce phase terms of the processed second partial correlation value and a further correlation value, which is calculated from a correlation between a further subset of the first sequence of values and a further subset of the second sequence of values, in accordance with the mean phase difference, in order to adjust the phase terms of the processed second and further partial correlation values to the phase term of the first partial correlation value.

5. Device according to any one of claims 1 to 4, wherein the phase difference is a mean phase difference between the partial correlation values, and wherein the processor is configured to reduce the phase term of the processed second partial correlation value in accordance with the mean phase difference, and to increase the phase term of a further correlation value, which is calculated from a correlation between a further subset of the first sequence of values and a further subset of the second sequence of values, in accordance with the mean phase difference, in order to adjust the phase terms of the processed second and further partial correlation values to the phase term of the first partial correlation value.

6. Device according to any one of claims 1 to 5, wherein the processor (104) is configured to determine the phase difference as a normalised sum of complex-conjugated multiplications of adjacent partial correlation values.

7. Device according to any one of claims 1 to 6, wherein the first sequence of values is part of a receive sequence, and wherein the second sequence of values is part of a transmit sequence, the receive sequence and the transmit sequence comprising a frequency offset, and the processor being configured to determine the frequency offset.

8. Method for determining a correlation value in a receiver from a correlation between a first sequence of values with complex values and a second sequence of values with complex values, the first sequence of values being part of a receive sequence received by the receiver, having the following steps:

calculating a first partial correlation value (118) from a correlation between a first subset of the first sequence of values (112) and a first subset of the second sequence of values (114), and calculating a second partial correlation value (120) from a correlation between a second subset of the first sequence of values (112) and a second subset of the second sequence of values (114);

calculating a processed second partial correlation value, with a phase term adjusted to a phase term of the first partial correlation value (118), from the second partial correlation value; and

determining the correlation value using the processed second partial correlation value,

wherein the calculation of the processed second partial correlation value comprises determining a phase difference between the partial correlation values (118, 120) and calculating the processed second partial correlation value by rotating the second partial correlation value by the phase difference thus determined; and

wherein the determination of the correlation value comprises an addition of the first partial correlation value and the processed second partial correlation value.

9. Device (100) for determining the time of incidence of a signal from a correlation between a first sequence of values with complex values and a second sequence of values with complex values, having the following features:

a correlator (102) configured to calculate a first partial correlation value (118) from a correlation between a first subset of the first sequence of values (112) and a first subset of the second sequence of values (114), a second partial correlation value (120) from a correlation between a second subset of the first sequence of values (112) and a second subset of the second sequence of values (114), and a third partial correlation value from a correlation between a third subset of the first sequence of values and a third subset of the second sequence of values;

a processor (104) configured to calculate a processed first partial correlation value (122) and a processed second partial correlation value from the first partial correlation value, the second partial correlation value and the third partial correlation value; and

a calculator (106) configured to determine the correlation value (116) using the processed partial correlation values,

wherein the processor (104) is configured to calculate the processed first partial correlation value (122) from a complex-conjugated multiplication of the first and second partial correlation values (118, 120),

and to calculate the processed second partial correlation value from a complex-conjugated multiplication of the second and third partial correlation values;

wherein the calculator is configured to add the processed first partial correlation value and the processed second partial correlation value to calculate a complex-valued correction value; and

wherein the device is further configured to detect a maximum modulus of the correlation value in order to determine the time of incidence of the signal from the maximum modulus of the correlation value.

10. Method for determining the time of incidence of a signal from a correlation between a first sequence of values with complex values and a second sequence of values with complex values, the method having the following steps:

calculating a first partial correlation value (118) from a correlation between a first subset of the first sequence of values (112) and a first subset of the second sequence of values (114), a second partial correlation value (120) from a correlation between a second subset of the first sequence of values (112) and a second subset of the second sequence of values (114), and a third partial correlation value from a correlation between a third subset of the first sequence of values and a third subset of the second sequence of values;

calculating a processed first partial correlation value with an adjusted phase term from the first partial correlation value and the second partial correlation value, by carrying out a complex-conjugated multiplication of the first partial correlation value and the second partial correlation value;

calculating a processed second partial correlation value by carrying out a complex-conjugated multiplication of the second partial correlation value and the third partial correlation value; and

determining the correlation value using the processed first and second partial correlation values,

wherein the determination of the correlation value comprises the following steps:

adding the processed first partial correlation value and the processed second partial correlation value to calculate a complex-valued correction value; and

detecting a maximum modulus of the correlation value in order to determine the time of incidence of the signal from the maximum modulus of the correlation value.

11. Computer program with a program code for performing the method according to either claim 8 or claim 10 when the computer program runs on a computer.

**Revendications**

1. Appareil (100) pour déterminer une valeur de corrélation à partir d'une corrélation entre une première série de valeurs à valeurs complexes et une deuxième série de valeurs à valeurs complexes, comprenant les caractéristiques suivantes :

un dispositif de corrélation (102), qui est propre à définir une première valeur de corrélation partielle (118) à partir d'une corrélation entre une première partie de la première série de valeurs (112) et une première partie de la deuxième série de valeurs (114), et une deuxième valeur de corrélation partielle (120) à partir d'une corrélation entre une deuxième partie de la première série de valeurs (112) et une deuxième partie de la deuxième série de valeurs (114) ;

un dispositif de traitement (104), qui est propre à définir à partir de la deuxième valeur de corrélation partielle une deuxième valeur de corrélation partielle traitée (124) avec un terme de phase adapté à un terme de phase de la première valeur de corrélation partielle (118) ; et
un dispositif de calcul (106), qui est propre à déterminer la valeur de corrélation (116) en utilisant la deuxième valeur de corrélation partielle traitée.

dans lequel le dispositif de traitement (104) est propre à déterminer une différence de phase entre les valeurs de corrélation partielle (118, 120) et définir la deuxième valeur de corrélation partielle traitée (124) par rotation de la deuxième valeur de corrélation partielle (120) autour de la différence de phase ainsi déterminée, et
dans lequel le dispositif de calcul (106) est propre à déterminer la valeur de corrélation (116) par addition de la première valeur de corrélation partielle et de la deuxième valeur de corrélation partielle traitée.

2. Appareil selon la revendication 1, dans lequel le dispositif de corrélation (102) est propre à définir les parties selon une règle de subdivision commune à partir des première et deuxième séries de valeurs (112, 114).

3. Appareil selon l'une quelconque des revendications 1 ou 2, dans lequel l'appareil est dimensionné pour recevoir la première série de valeurs (112) et enregistrer ou recevoir la deuxième série de valeurs (114).

4. Appareil selon l'une quelconque des revendications 1 à 3, dans lequel la différence de phase est une différence de phase moyenne entre les valeurs de corrélation partielle, et dans lequel le dispositif de traitement est dimensionné pour réduire des termes de phase de la deuxième valeur de corrélation partielle traitée et d'une autre valeur de corrélation partielle, déterminée à partir d'une corrélation entre une autre partie de la première série de valeurs et une autre partie de la deuxième série de valeurs, en fonction de la différence de phase moyenne, pour ajuster les termes de phase de la deuxième valeur de corrélation partielle traitée et des valeurs de corrélation partielle traitées suivantes au terme de phase de la première valeur de corrélation partielle.

5. Appareil selon l'une quelconque des revendications 1 à 4, dans lequel la différence de phase est une différence de phase moyenne entre les valeurs de corrélation partielle, et dans lequel le dispositif de traitement est dimensionné pour réduire le terme de phase de la deuxième valeur de corrélation partielle traitée en fonction de la différence de phase moyenne, et pour augmenter un terme de phase d'une autre valeur de corrélation partielle, déterminée à partir d'une corrélation entre une autre partie de la première série de valeurs et une autre partie de la deuxième série de valeurs, en fonction de la différence de phase moyenne, pour adapter les termes de phase de la deuxième valeur de corrélation partielle et des valeurs de corrélation partielle suivantes au terme de phase de la première valeur de corrélation partielle.

6. Appareil selon l'une quelconque des revendications 1 à 5, dans lequel le dispositif de traitement (104) est propre à déterminer la différence de phase sous la forme d'une somme normale de multiplications conjuguées complexes de valeurs de corrélation partielle voisines.

7. Appareil selon l'une quelconque des revendications 1 à 6, dans lequel la première série de valeurs fait partie d'une série de réception, et dans lequel la deuxième série de valeurs fait partie d'une série d'émission, dans lequel la série de réception et la série d'émission présentent un décalage de fréquence, et dans lequel le dispositif de traitement est propre à déterminer le décalage de fréquence.

8. Procédé pour déterminer une valeur de corrélation dans un récepteur, à partir d'une corrélation entre une première série de valeurs à valeurs complexes et une deuxième série de valeurs à valeurs complexes, dans lequel la première série de valeurs fait partie d'une série de réception reçue par le récepteur, comprenant les étapes suivantes consistant à :

définir une première valeur de corrélation partielle (118) à partir d'une corrélation entre une première partie de la première série de valeurs (112) et une première partie de la deuxième série de valeurs (114), et on définit une deuxième valeur de corrélation partielle (120) à partir d'une corrélation entre une deuxième partie de la première série de valeurs (112) et une deuxième partie de la deuxième série de valeurs (114) ;
définir une deuxième valeur de corrélation partielle traitée avec un terme de phase adapté au terme de phase de la première valeur de corrélation partielle (118) à partir de la deuxième valeur de corrélation partielle ; et
déterminer la valeur de corrélation en utilisant la deuxième valeur de corrélation partielle traitée,

dans lequel la définition de la deuxième valeur de corrélation partielle traitée comprend la détermination d'une différence de phases entre les valeurs de corrélation partielle (118, 120) ainsi que la définition de la deuxième valeur de corrélation partielle traitée par rotation de la deuxième valeur de corrélation partielle autour de la différence de phase ainsi déterminée ; et

dans lequel la détermination de la valeur de corrélation comprend l'addition de la première valeur de corrélation partielle et de la deuxième valeur de corrélation partielle traitée.

**9.** Appareil (100) pour déterminer le moment d'arrivée d'un signal à partir d'une corrélation entre une première série de valeurs à valeurs complexes et une deuxième série de valeurs à valeurs complexes, comprenant les caractéristiques suivantes :

un dispositif de corrélation (102), qui est propre à définir une première valeur de corrélation partielle (118) à partir d'une corrélation entre une première partie de la première série de valeurs (112) et une première partie de la deuxième série de valeurs (114), une deuxième valeur de corrélation partielle (120) à partir d'une corrélation entre une deuxième partie de la première série de valeurs (112) et une deuxième partie de la deuxième série de valeurs (114), ainsi qu'une troisième valeur de corrélation partielle à partir d'une corrélation entre une troisième partie de la première série de valeurs et une troisième partie de la deuxième série de valeurs ;
un dispositif de traitement (104), qui est propre à définir une première valeur de corrélation partielle traitée (122) et une deuxième valeur de corrélation partielle traitée, à partir de la première valeur de corrélation partielle, de la deuxième valeur de corrélation partielle et de la troisième valeur de corrélation partielle ; et
un dispositif de calcul (106), qui est propre à déterminer la valeur de corrélation (116) en utilisant les valeurs de corrélation partielle traitées;

dans lequel le dispositif de traitement (104) est conçu pour définir la première valeur de corrélation partielle traitée (122) à partir d'une multiplication conjuguée complexe des première et deuxième valeurs de corrélation partielle (118, 120), et

à définir la deuxième valeur de corrélation partielle traitée à partir d'une multiplication conjuguée complexe de la deuxième et de la troisième valeurs de corrélation partielle ;
dans lequel le dispositif de calcul est propre à ajouter la première valeur de corrélation partielle traitée et la deuxième valeur de corrélation partielle traitée pour calculer une valeur de corrélation complexe ; et
dans lequel l'appareil est en outre propre à détecter un niveau maximal de la valeur de corrélation pour définir le moment d'arrivée du signal à partir du niveau maximal de la valeur de corrélation.

**10.** Procédé pour déterminer le moment d'arrivée d'un signal à partir d'une corrélation entre une première série de valeurs à valeurs complexes et une deuxième série de valeurs à valeurs complexes, dans lequel le procédé présente les étapes suivantes consistant à :

définir une première valeur de corrélation partielle (118) à partir d'une corrélation entre une première partie de la première série de valeurs (112) et une première partie de la deuxième série de valeurs (114), définir une deuxième valeur de corrélation partielle (120) à partir d'une corrélation entre une deuxième partie de la première série de valeurs (112) et une deuxième partie de la deuxième série de valeurs (114) et définir une troisième valeur de corrélation partielle à partir d'une corrélation entre une troisième partie de la première série de valeurs et une troisième partie de la deuxième série de valeurs ;
définir une première valeur de corrélation partielle traitée avec un terme de phase adapté à partir de la première valeur de corrélation partielle et de la deuxième valeur de corrélation partielle en effectuant une multiplication conjuguée complexe de la première valeur de corrélation partielle et de la deuxième valeur de corrélation partielle ;
définir une deuxième valeur de corrélation partielle traitée en effectuant une multiplication conjuguée complexe de la deuxième valeur de corrélation partielle et de la troisième valeur de corrélation partielle ; et
déterminer la valeur de corrélation en utilisant les première et deuxième valeurs de corrélation partielle traitées,

dans lequel la détermination de la valeur de corrélation comprend les étapes suivantes :

ajouter la première valeur de corrélation partielle traitée et la deuxième valeur de corrélation partielle traitée pour calculer une valeur de corrélation complexe ; et
détecter un niveau maximum de la valeur de corrélation pour définir le moment d'arrivée du signal à partir du niveau maximal de la valeur de corrélation.

**11.** Programme informatique avec un code de programme pour mettre en oeuvre le procédé selon la revendication 8 ou 10, lorsque le programme informatique est exécuté sur un ordinateur.

FIG. 1

FIG. 2

SCATTER-DIAGRAMM ALLER AUS 16 TEILKORRELATIONEN ERHALTENEN SAMPLES

FIG. 3

EP 1 825 603 B1

FIG. 4

VERHÄLTNIS ZWISCHEN KORRELATION UND
KORRELATIONSFLOOR (ERSTE MÖGLICHKEIT)

FIG. 5

SCATTER-DIAGRAMM ALLER KONJUNGIERT KOMPLEX MULTIPLIZIERTEN
SAMPLES (AUS 16 TEILKORRELATIONEN)

FIG. 6

EP 1 825 603 B1

FIG. 7

VERHÄLTNIS ZWISCHEN KORRELATION
UND KORRELATIONSFLOOR (ZWEITE MÖGLICHKEIT)

FIG. 8

| NAME | ALPHA α | BETA β | Avg Err (linear) | RMS (dB) | Peak (dB) |
|---|---|---|---|---|---|
| Min RMS Err | 0,947543636291 | 0,392485425092 | 0,000547 | -32,6 | -25,6 |
| Min Peak Err | 0,960433870103 | 0,397824734759 | -0,013049 | -31,4 | -28,1 |
| Min RMS w/ Avg=0 | 0,948059448969 | 0,392699081699 | 0,000003 | -32,6 | -25,7 |
| 1, Min RMS Err | 1 | 0,32326099 | -0,020865 | -28,7 | -23,8 |
| 1, Min Peak Err | 1 | 0,335982538 | -0,025609 | -28,3 | -25,1 |
| 1, 1/2 | 1 | 0,5 | -0,086775 | -20,7 | -18,6 |
| 1, 1/4 | 1 | 0,25 | 0,006456 | -27,6 | -18,7 |
| Frerking | 1 | 0,4 | -0,049482 | -25,1 | -22,3 |
| 1, 11/32 | 1 | 0,34375 | -0,028505 | -28,0 | -24,8 |
| 1, 3/8 | 1 | 0,375 | -0,040159 | -26,4 | -23,4 |
| 15/16, 15/32 | 0,9375 | 0,46875 | -0,018851 | -29,2 | -24,1 |
| 15/16, 1/2 | 0,9375 | 0,5 | -0,030505 | -26,9 | -24,1 |
| 31/32, 11/32 | 0,96875 | 0,34375 | -0,000371 | -31,6 | -22,9 |
| 31/32, 3/8 | 0,96875 | 0,375 | -0,012024 | -31,4 | -26,1 |
| 61/64, 3/8 | 0,953125 | 0,375 | 0,002043 | -32,5 | -24,3 |
| 61/64, 13/32 | 0,953125 | 0,40625 | -0,009611 | -31,8 | -26,6 |

## FIG. 9

FIG. 10

FIG. 11

FIG. 12

EP 1 825 603 B1

FIG. 13

EP 1 825 603 B1

INPUT 112 — NET1 — M12 FIR_modified — NET15 — M7 DELAY — NET9 — OUTPUT 118

**0-4-1-1-1-2-1-1**

**0-4-1-1-1-2-1-2**

FIG. 14

| Name | Type | Owner | Date |
|---|---|---|---|
| a_corrburst | Var | wgc | 12.12.03 |
| Description | | | |
| Korrelationssignal | | | |

# FIG. 15a

| Name | Type | Owner | Date |
|---|---|---|---|
| a_corrburstlen | Var | wgc | 12.12.03 |
| Description | | | |
| Länge des Korrelationssignals in Symbolen (komplex) | | | |

# FIG. 15b

| Name | Type | Owner | Date |
|------|------|-------|------|
| comrotterm | Trans | koe | 15.10.03 |
| Description | | | |
| geschätzter Rotationsterm zur Kompensation eines Frequenzversatzes bei den Teilkorrelationen | | | |
| Representation | | | |
| komplexwertig | | | |
| Comment | | | |
| komplexwertig, so dass Betrag auf 1 normiert wurde | | | |

## FIG. 15c

| Name | Type | Owner | Date |
|------|------|-------|------|
| corrvals | Trans | koe | 15.10.03 |
| Description | | | |
| Im FPGA berechnete komplexe Korrelationswerte | | | |
| Representation | | | |
| Vektor aus komplexen Werten | | | |

## FIG. 15d

| Name | Type | Owner | Date |
|------|------|-------|------|
| maxind0 | Trans | koe | 15.10.03 |
| Description | | | |
| Index (gezählt ab 0) des Korrelationswerts corrvals mit maximalen Betrag | | | |
| Representation | | | |
| Integer | | | |

# FIG. 15e

| Name | Type | Owner | Date |
|------|------|-------|------|
| recenerg | Trans | koe | 15.10.03 |
| Description | | | |
| Energie des Empfangssignals (Summe über I- und Q-Komponeneten) berechnet über der geschätzten Lage des T-Bursts innerhalb des Fensters | | | |
| Representation | | | |
| integer | | | |

# FIG. 15f

| Name | Type | Owner | Date |
|---|---|---|---|
| **t_nocorrvals** | Const | koe | 27.10.03 |
| Description | | | |
| Anzahl von Tracking-(Teil-)Korrelationswerten | | | |

# FIG. 15g

| Name | Type | Owner | Date |
|---|---|---|---|
| **t_nopartcorrs** | Const | koe | 30.10.03 |
| Description | | | |
| Anzahl der Tracking-Teilkorrelationen zur Bekämpfung des Frequenzversatzes | | | |
| Comment | | | |
| – muss immer GERADE sein<br>– ist für alle Sender gleich | | | |

# FIG. 15h

| Name | Type | Owner | Date |
|---|---|---|---|
| t_paddcorrseqlen | Const | koe | 30.10.03 |
| Description | | | |
| Gesamtlänge der (ggf. zero-padded) Tracking-Teilkorrelationssequenzen | | | |

## FIG. 15i

| Name | Type | Owner | Date |
|---|---|---|---|
| t_partcorrseqlen | Const | koe | 30.10.03 |
| Description | | | |
| Länge jeder Tracking-Teilkorrelationssequenz | | | |
| Comment | | | |
| t_partcorrseqlen=t_paddcorrseqlen / t_nopartcorrs | | | |

## FIG. 15j

| Name | Type | Owner | Date |
|---|---|---|---|
| t0_partcorrseqs | Var | koe | 30.10.03 |
| Description | | | |
| Tracking-Teilkorrelationssequenzen für T-Burst 0 des betrachteten Senders | | | |
| Comment | | | |
| - t_nopartcorrs (komplexwertige) Sequenzen der Länge t_partcorrseqlen<br>- I- und Q-Komponente liegen jeweils mit Wertebereich - 1 bis +1 | | | |

# FIG. 15k

| Name | Type | Owner | Date |
|---|---|---|---|
| t1_partcorrseqs | Var | koe | 30.10.03 |
| Description | | | |
| Tracking-Teilkorrelationssequenzen für T-Burst 1 des betrachteten Senders | | | |
| Comment | | | |
| - in linearem Maß, d.h. $10^{-1,2}$ entspricht SNIR=-12dB<br>- kann für jeden Sender unterschiedlich sein (aber für die beiden T-Bursts eines Senders immer gleicher Wert) | | | |

# FIG. 15l

| Name | Type | Owner | Date |
|------|------|-------|------|
| **transmitbit** | Trans | koe | 15.10.03 |
| Description | | | |
| geschätztes übertragenes Channelbit | | | |
| Representation | | | |
| integer | | | |

## FIG. 15m

| Name | Type | Owner | Date |
|------|------|-------|------|
| **toa** | Trans | hfn | 15.10.03 |
| Description | | | |
| geschätzte TOA des T-Burst-Starts | | | |
| Representation | | | |
| Integer | | | |
| Comment | | | |
| in ps seit Systemstart; nur für Positionsberechnung | | | |

## FIG. 15n

| Name | Type | Owner | Date |
|---|---|---|---|
| winstartpos | Trans | koe | 15.10.03 |
| Description | | | |
| Timestamp des Starts des Fensters, in dem die Korrelationswerte berechnet wurden | | | |
| Representation | | | |
| Integer | | | |
| Comment | | | |
| dieser Timestamp gehört zu dem Korrelationswert corrvals mit dem Index 0 | | | |

# FIG. 15o

| Name | Type | Owner | Date |
|---|---|---|---|
| a_nopartcorrs | Const | wgc | 14.10.03 |
| Description | | | |
| Anzahl der Teilkorrelationen im Empfänger-Algorithmus des Akquisition-Bursts | | | |

# FIG. 15p

k=1389/4

k=1389/2

k=0

k=1389

k=1389*3/4

FIG. 16
(STAND DER TECHNIK)

**IN DER BESCHREIBUNG AUFGEFÜHRTE DOKUMENTE**

**In der Beschreibung aufgeführte Patentdokumente**

- US 5579338 A